(19) Europäisches Patentamt / European Patent Office / Office européen des brevets

(11) **EP 4 538 344 A1**

(12) **EUROPEAN PATENT APPLICATION**
published in accordance with Art. 153(4) EPC

(43) Date of publication:
**16.04.2025 Bulletin 2025/16**

(21) Application number: **23911341.8**

(22) Date of filing: **17.10.2023**

(51) International Patent Classification (IPC):
**C09K 5/04** $^{(2006.01)}$     **F25B 1/00** $^{(2006.01)}$

(52) Cooperative Patent Classification (CPC):
**B60H 1/22; C09K 5/04; F25B 1/00**

(86) International application number:
**PCT/JP2023/037579**

(87) International publication number:
**WO 2024/142557 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.12.2022  JP 2022212132**

(71) Applicant: **DAIKIN INDUSTRIES, LTD.**
**Osaka-shi, Osaka 530-0001 (JP)**

(72) Inventors:
• **ITANO, Mitsushi**
  **Osaka-Shi, Osaka 530-0001 (JP)**
• **NAKAUE, Tsubasa**
  **Osaka-Shi, Osaka 530-0001 (JP)**
• **KOMATSU, Yuzo**
  **Osaka-Shi, Osaka 530-0001 (JP)**

(74) Representative: **Hoffmann Eitle**
**Patent- und Rechtsanwälte PartmbB**
**Arabellastraße 30**
**81925 München (DE)**

(54) **REFRIGERANT-CONTAINING COMPOSITION, USE OF SAME, REFRIGERATOR COMPRISING SAME, AND METHOD FOR OPERATING REFRIGERATOR**

(57)    This invention provides a novel low-GWP mixed refrigerant. It is a composition comprising a refrigerant, and the refrigerant comprises trans-1,2-difluoroethylene (HFO-1132(E)) and propane, and a total content of HFO-1132(E) and propane is 99.5 mass% or more based on a total amount of the refrigerant.

Processed by Luminess, 75001 PARIS (FR)

EP 4 538 344 A1

**Description**

Technical Field

The present disclosure relates to a composition comprising a refrigerant, use of the composition, a refrigerating machine having the composition, and a method for operating the refrigerating machine.

Background Art

A working medium for thermal cycling that contains trifluoroethylene (HFO-1123) and 1,2-difluoroethylene (HFO-1132)has been proposed as a working medium for thermal cycling that can replace R410A (PTL 1).

Citation List

Patent Literature

PTL 1: WO2015/141678

Summary of Invention

Technical Problem

An object of the present disclosure is to provide a novel low-GWP mixed refrigerant.

Solution to Problem

Item 1. A composition comprising a refrigerant,
wherein the refrigerant comprises trans-1,2-difluoroethylene (HFO-1132(E)) and propane, a total content of HFO-1132(E) and propane being 99.5 mass% or more based on a total amount of the refrigerant, the refrigerant comprising:

HFO-1132(E) in an amount of 25.0 mass% to 29.2 mass% based on the total amount of HFO-1132(E) and propane;
HFO-1132(E) in an amount of 30.7 mass% to 38.9 mass% based on the total amount of HFO-1132(E) and propane;
HFO-1132(E) in an amount of 43.5 mass% to 48.5 mass% based on the total amount of HFO-1132(E) and propane;
HFO-1132(E) in an amount of 51.2 mass% to 56.3 mass% based on the total amount of HFO-1132(E) and propane;
HFO-1132(E) in an amount of 61.4 mass% to 66.8 mass% based on the total amount of HFO-1132(E) and propane;
HFO-1132(E) in an amount of 72.4 mass% to 75.0 mass% based on the total amount of HFO-1132(E) and propane;
HFO-1132(E) in an amount of 20.6 mass% to 29.9 mass% based on the total amount of HFO-1132(E) and propane;
HFO-1132(E) in an amount of 32.0 mass% to 37.0 mass% based on the total amount of HFO-1132(E) and propane;
HFO-1132(E) in an amount of 42.2 mass% to 48.8 mass% based on the total amount of HFO-1132(E) and propane;
HFO-1132(E) in an amount of 50.4 mass% to 57.0 mass% based on the total amount of HFO-1132(E) and propane;
HFO-1132(E) in an amount of 62.3 mass% to 68.0 mass% based on the total amount of HFO-1132(E) and propane;
HFO-1132(E) in an amount of 70.8 mass% to 75.0 mass% based on the total amount of HFO-1132(E) and propane;
HFO-1132(E) in an amount of 7.0 mass% to 9.7 mass% based on the total amount of HFO-1132(E) and propane;

HFO-1132(E) in an amount of 10.4 mass% to 18.0 mass% based on the total amount of HFO-1132(E) and propane;

HFO-1132(E) in an amount of 20.6 mass% to 29.4 mass% based on the total amount of HFO-1132(E) and propane;

HFO-1132(E) in an amount of 31.3 mass% to 38.7 mass% based on the total amount of HFO-1132(E) and propane; or

HFO-1132(E) in an amount of 40.6 mass% to 48.5 mass% based on the total amount of HFO-1132(E) and propane;

HFO-1132(E) in an amount of 50.8 mass% to 58.8 mass% based on the total amount of HFO-1132(E) and propane;

HFO-1132(E) in an amount of 60.1 mass% to 69.2 mass% based on the total amount of HFO-1132(E) and propane; or

HFO-1132(E) in an amount of 70.3 mass% to 75.0 mass% based on the total amount of HFO-1132(E) and propane.

Item 2. The composition according to Item 1, wherein the refrigerant further comprises at least one member selected from the group consisting of 1,1-difluoroethylene (HFO-1132a), and 2 chloro-1,1,1,2-tetrafluoroethane (HCFC-124).

Item 3. The composition according to Item 1 or 2, further comprising 0.1 mass% or less of water based on the entire composition.

Item 4. The composition according to any one of Items 1 to 3, for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

Item 5. A composition comprising a refrigerant, for operating a refrigeration cycle of air conditioning equipment for electric vehicles,

wherein the refrigerant comprises HFO-1132(E) and propane, a total content of HFO-1132(E) and propane being 99.5 mass% or more based on a total amount of the refrigerant,
a content of HFO-1132(E) is 20.6 to 75.0 mass% based on the total amount of HFO-1132(E) and propane,
a COP ratio relative to R1234yf is 99% or more, and
a refrigerating capacity ratio relative to R1234yf is 200% or more.

Item 6. A composition comprising a refrigerant, for use as an alternative refrigerant for R410A,

wherein the refrigerant comprises HFO-1132(E), difluoroethylene (R32) and propane, a total content of HFO-1132(E), R32, and propane being 99.5 mass% or more based on a total amount of the refrigerant,
when the mass% of HFO-1132(E), R32, and propane based on their sum are respectively represented by x, y, and z, coordinates (x,y,z) in a ternary composition diagram in which the sum of HFO-1132(E), R32, and propane is 100 mass% are within the range of a figure surrounded by straight lines CP, PQ, QR, RA, and AC that connect the following 5 points:

point C (60.0, 40.0, 0.0),
point P (73.1, 5.0, 21.9),
point Q (10.0, 5.0, 85.0),
point R (10.0, 44.2, 45.8), and
point A (55.7, 44.3, 55.8), or

on the straight lines CP, QR, and RA (excluding the points A, C, P, and Q) .

Item 7. A composition comprising a refrigerant, for use as an alternative refrigerant for R1234yf and/or an alternative refrigerant for R404A,

wherein the refrigerant comprises HFO-1132(E), R32, and propane, a total content of HFO-1132(E), R32, and propane being 99.5 mass% or more based on a total amount of the refrigerant,
when the mass% of HFO-1132(E), R32, and propane based on their sum are respectively represented by x, y, and z, coordinates (x,y,z) in a ternary composition diagram in which the sum of HFO-1132(E), R32, and propane is 100 mass% are within the range of a figure surrounded by straight lines PQ, QR, KJ, and JP that connect the following 4 points:

> point P (73.1, 5.0, 21.9),
> point Q (10.0, 5.0, 85.0),
> point K (10.0, 21.9, 68.1), and
> point J (66.7, 22.1, 11.2), or

on the straight lines JP, QK, and KJ.

Item 8. A composition comprising a refrigerant, for use as an alternative refrigerant for R410A,

wherein the refrigerant comprises HFO-1132(E), R32, propane, and carbon dioxide ($CO_2$), a total content of HFO-1132(E), R32, propane, and $CO_2$ being 99.5 mass% or more based on a total amount of the refrigerant, when the mass% of $CO_2$, HFO-1132(E), R32, and propane based on their sum are respectively represented by a, x, y, and z, coordinates (x,y,z) in a ternary composition diagram in which the sum of HFO-1132(E), R32, and propane is (100-a) mass% are, when $0.0 < a \le 10.0$, within the range of a figure surrounded by straight lines C'D', D'Q', Q'R', R'A', and A'C' that connect the following 5 points:

> point C' (60.0, -a+40.0, 0.0),
> point D' (75.0, 0, -a+25.0),
> point Q' (10.0, 0.0, -a+90.0),
> point R' (10.0, 44.2, -a+45.8), and
> point A' (-a+55.7, 44.3, 0.0), or

on the straight lines C'D', Q'R', and R'A' (excluding the points A', C', D', and Q').

Item 9. A composition comprising a refrigerant, for use as an alternative refrigerant for R1234yf, and/or an alternative refrigerant for R404A,

wherein the refrigerant comprises HFO-1132(E), R32, propane, and $CO_2$, a total content of HFO-1132(E), R32, propane, and $CO_2$ being 99.5 mass% or more based on a total amount of the refrigerant, when the mass% of $CO_2$, HFO-1132(E), R32, and propane based on their sum are respectively represented by a, x, y, and z, coordinates (x,y,z) in a ternary composition diagram in which the sum of HFO-1132(E), R32, and propane is (100-a) mass% are, when $0.0 < a \le 0.5$, within the range of a figure surrounded by straight lines J'D', D'Q', Q'K', and K'J' that connect the following 4 points:

> point J' (66.7, 22.1, -a+11.2),
> point D' (75.0, 0.0, -a+25.0),
> point Q' (10.0, 0.0, -a+90.0), and
> point K' (10.0, 21.9, -a+68.1), or

on the straight lines J'D', D'Q', Q'K', and K'J', and the coordinates (x,y,z) are, when $0.5 < a \le 10.0$, within the range of a figure surrounded by straight lines J'D', D'Q', Q'K', and K'J' that connect the following 4 points:

> point J' (-0.0524a2+0.266a+66.58, 22.1, 0.0524a2-1.266a+11.32),
> point D' (75.0, 0.0, -a+25.0),
> point Q' (10.0, 0.0, -a+90.0), and
> point K' (10.0, 21.9, -a+68.1), or

on the straight lines J'D', Q'K', and K'J'.

Item 10. A refrigeration apparatus comprising:

a use side heat transfer cycle for circulating a use side refrigerant;
a heat source side heat transfer cycle for circulating a heat source side refrigerant; and

a cascade heat exchanger for performing heat exchange between the use side refrigerant and the heat source side refrigerant,

wherein the heat source side refrigerant is the composition according to any one of Items 1 to 9.

Item 11. A refrigeration method comprising a step of operating a refrigeration cycle using the composition according to any one of Items 1 to 9.

Item 12. A refrigerator comprising the composition according to any one of Items 1 to 9 as a working fluid.

Item 13. Use of the composition according to any one of Items 1 to 9 as a working fluid in a refrigerator.

Advantageous Effects of Invention

The refrigerant of the present disclosure has a low GWP.

Brief Description of Drawings

Fig. 1 is a ternary diagram showing formulations of the refrigerant of the present disclosure.
Fig. 2 is a ternary diagram showing formulations of the refrigerant of the present disclosure.
Fig. 3 is a ternary diagram showing formulations of the refrigerant of the present disclosure.
Fig. 4 is a ternary diagram showing formulations of the refrigerant of the present disclosure.
Fig. 5 is a ternary diagram showing formulations of the refrigerant of the present disclosure.
Fig. 6 is a ternary diagram showing formulations of the refrigerant of the present disclosure.
Fig. 7 is a ternary diagram showing formulations of the refrigerant of the present disclosure.
Fig. 8 is a ternary diagram showing formulations of the refrigerant of the present disclosure.
Fig. 9 is a ternary diagram showing formulations of the refrigerant of the present disclosure.
Fig. 10 is a ternary diagram showing formulations of the refrigerant of the present disclosure.
Fig. 11 is a ternary diagram showing formulations of the refrigerant of the present disclosure.
Fig. 12 is a ternary diagram showing formulations of the refrigerant of the present disclosure.

Description of Embodiments

In order to achieve the above object, the present inventors conducted extensive research and found that various mixed refrigerants described below have the characteristics described above.
The present disclosure has been completed as a result of further research based on this finding. The present disclosure includes the following embodiments.

<Definition of Terms>

In the present specification, the term "refrigerant" includes at least compounds that are specified in ISO 817 (International Organization for Standardization) and that are given a refrigerant number (ASHRAE number) representing the type of refrigerant with "R" at the beginning, and further includes refrigerants that have properties equivalent to those of such refrigerants, even though a refrigerant number is not yet given. Refrigerants are broadly divided into fluorocarbon compounds and non-fluorocarbon compounds in terms of the structure of the compounds. Fluorocarbon compounds include chlorofluorocarbons (CFC), hydrochlorofluorocarbons (HCFC), and hydrofluorocarbons (HFC) .
In the present specification, the phrase "composition comprising a refrigerant" at least includes (1) a refrigerant itself (including a mixture of refrigerants), (2) a composition that further comprises other components and that can be mixed with at least a refrigeration oil to obtain a working fluid for a refrigerating machine, and (3) a working fluid for a refrigerating machine containing a refrigeration oil. In the present specification, of these three embodiments, the composition (2) is referred to as a "refrigerant composition" so as to distinguish it from a refrigerant itself (including a mixture of refrigerants). Further, the working fluid for a refrigerating machine (3) is referred to as a "refrigeration-oil-containing working fluid" so as to distinguish it from the "refrigerant composition."
In the present specification, when the term "alternative" is used in a context in which the first refrigerant is replaced with the second refrigerant, the first type of "alternative" means that equipment designed for operation using the first refrigerant can be operated using the second refrigerant under optimum conditions, optionally with changes of only a few parts (at least one of the following: refrigeration oil, gasket, packing, expansion valve, dryer, and other parts) and equipment adjustment. In other words, this type of alternative means that the same equipment is operated with an alternative refrigerant. Embodiments of this type of "alternative" include "drop-in alternative," "nearly drop-in alternative," and "retrofit," in the order in which the extent of changes and adjustment necessary for replacing the first refrigerant with the second refrigerant is smaller.

The term "alternative" also includes a second type of "alternative," which means that equipment designed for operation using the second refrigerant is operated for the same use as the existing use with the first refrigerant by using the second refrigerant. This type of alternative means that the same use is achieved with an alternative refrigerant.

In the present specification, the term "refrigerating machine" refers to machines in general that draw heat from an object or space to make its temperature lower than the temperature of ambient air, and maintain a low temperature. In other words, refrigerating machines refer to conversion machines that gain energy from the outside to do work, and that perform energy conversion, in order to transfer heat from where the temperature is lower to where the temperature is higher.

In the present specification, "air-conditioning equipment for vehicles" is a type of refrigeration apparatus for use in vehicles, such as gasoline vehicles, hybrid vehicles, electric vehicles, and hydrogen vehicles. The air-conditioning equipment for vehicles refers to a refrigeration apparatus that has a refrigeration cycle in which heat exchange is performed by an evaporator using a liquid refrigerant, the evaporated refrigerant gas is absorbed by a compressor, the adiabatically compressed refrigerant gas is cooled and liquefied with a condenser, the liquefied refrigerant is adiabatically expanded by passing it through an expansion valve, and then the refrigerant is supplied again in the form of a liquid to the evaporator.

In the present specification, the unit of pressure is an absolute pressure unless otherwise specified.

1. Refrigerant

The refrigerant of the present disclosure comprises trans-1,2-difluoroethylene (HFO-1132(E)) and propane, a total content of HFO-1132(E) and propane being 99.5 mass% or more based on a total amount of the refrigerant, and the refrigerant comprises:

(1) HFO-1132(E) in an amount of 25.0 mass% to 29.2 mass% based on the total amount of HFO-1132(E) and propane;
(2) HFO-1132(E) in an amount of 30.7 mass% to 38.9 mass% based on the total amount of HFO-1132(E) and propane;
(3) HFO-1132(E) in an amount of 43.5 mass% to 48.5 mass% based on the total amount of HFO-1132(E) and propane;
(4) HFO-1132(E) in an amount of 51.2 mass% to 56.3 mass% based on the total amount of HFO-1132(E) and propane;
(5) HFO-1132(E) in an amount of 61.4 mass% to 66.8 mass% based on the total amount of HFO-1132(E) and propane;
(6) HFO-1132(E) in an amount of 72.4 mass% to 75.0 mass% based on the total amount of HFO-1132(E) and propane;
(7) HFO-1132(E) in an amount of 20.6 mass% to 29.9 mass% based on the total amount of HFO-1132(E) and propane;
(8) HFO-1132(E) in an amount of 32.0 mass% to 37.0 mass% based on the total amount of HFO-1132(E) and propane;
(9) HFO-1132(E) in an amount of 42.2 mass% to 48.8 mass% based on the total amount of HFO-1132(E) and propane;
(10) HFO-1132(E) in an amount of 50.4 mass% to 57.0 mass% based on the total amount of HFO-1132(E) and propane;
(11) HFO-1132(E) in an amount of 62.3 mass% to 68.0 mass% based on the total amount of HFO-1132(E) and propane;
(12) HFO-1132(E) in an amount of 70.8 mass% to 75.0 mass% based on the total amount of HFO-1132(E) and propane;
(13) HFO-1132(E) in an amount of 7.0 mass% to 9.7 mass% based on the total amount of HFO-1132(E) and propane;
(14) HFO-1132(E) in an amount of 10.4 mass% to 18.0 mass% based on the total amount of HFO-1132(E) and propane;
(15) HFO-1132(E) in an amount of 20.6 mass% to 29.4 mass% based on the total amount of HFO-1132(E) and propane;
(16) HFO-1132(E) in an amount of 31.3 mass% to 38.7 mass% based on the total amount of HFO-1132(E) and propane; or
(17) HFO-1132(E) in an amount of 40.6 mass% to 48.5 mass% based on the total amount of HFO-1132(E) and propane;
(18) HFO-1132(E) in an amount of 50.8 mass% to 58.8 mass% based on the total amount of HFO-1132(E) and propane;
(19) HFO-1132(E) in an amount of 60.1 mass% to 69.2 mass% based on the total amount of HFO-1132(E) and propane; or
(20) HFO-1132(E) in an amount of 70.3 mass% to 75.0 mass% based on the total amount of HFO-1132(E) and propane.

The refrigerant of the present disclosure is a low-GWP mixed refrigerant.

The refrigerant (1) has a refrigerating capacity ratio relative to R410A of 73% or more, and a COP ratio relative to R410A of 103.25% or more.

The refrigerant (2) has a refrigerating capacity ratio relative to R410A of 76% or more, and a COP ratio relative to R410A of 102% or more.

The refrigerant (3) has condensation glide of 5.0 K or less, and a COP ratio relative to R410A of 100.5% or more.

The refrigerant (4) has condensation glide of 3.75 K or less, and a COP ratio relative to R410A of 99.5% or more.

The refrigerant (5) has condensation glide of 2.0 K or less, and a COP ratio relative to R410A of 98.75% or more.

The refrigerant (6) has a refrigerating capacity ratio relative to R410A of 95% or more, and a disproportion reaction does not occur even at 3 Mpa and 150°C of the refrigerant.

The refrigerant of the present disclosure comprises HFO-1132(E) and propane in an amount of 99.5% or more, and may comprise at least one member selected from HFO-1132a and R124 in an amount of 0.5 mass% or less.

The refrigerant of the present disclosure may be an alternative refrigerant for A410A, comprising HFO-1132(E) and propane in an amount of 99.5% or more, comprising HFO-1132(E) in an amount of 25.0 mass% to 75.0 mass% based on a total amount of HFO-1132(E) and propane, and comprising at least one member selected from the group consisting of HFO-1132a and R124 in an amount of 0.5 mass% or less. This refrigerant has a refrigerating capacity ratio relative to R410A of 73% or more, and a disproportionation reaction does not occur even at 3 Mpa and 150°C of the refrigerant.

The refrigerant (7) has a refrigerating capacity ratio relative to R1234yf of 200% or more, and a COP ratio relative to R1234yf of 102.0% or more.

The refrigerant (8) has condensation glide of 6.6 K or less, and a COP ratio relative to R1234yf of 101.5% or more.

The refrigerant (9) has condensation glide of 5.6 K or less, and a COP ratio relative to R1234yf of 100.25% or more.

The refrigerant (10) has a refrigerating capacity ratio relative to R1234yf of 250% or more, and a COP ratio relative to R1234yf of 99.5% or more.

The refrigerant (11) has condensation glide of 2.0 K or less, and a COP ratio relative to R1234yf of 99.1% or more.

The refrigerant (12) has a refrigerating capacity ratio relative to R1234yf of 280% or more, and a disproportionation reaction does not occur even at 3 Mpa and 150°C of the refrigerant.

The refrigerant of the present disclosure may be an alternative refrigerant for R1234yf, comprising HFO-1132(E) and propane in an amount of 99.5% or more, comprising HFO-1132(E) in an amount of 20.6 mass% to 75.0 mass% based on a total amount of HFO-1132(E) and propane, and comprising at least one member selected from the group consisting of HFO-1132a and R124 in an amount of 0.5 mass% or less. This refrigerant has a refrigerating capacity ratio relative to R1234yf of 200% or more, and a disproportionation reaction does not occur even at 3 Mpa and 150°C of the refrigerant.

The refrigerant of the present disclosure can suppress the disproportionation reaction even when the refrigerant pressure is locally 3 MPa and the refrigerant temperature is locally 150°C in the refrigeration cycle.

In addition, since the refrigerant of the present disclosure has a boiling point of -40.0°C or lower, there is an advantage that the refrigerant is easy to use in heating by a heat pump. For example, when the refrigerant of the present disclosure is used for operating a refrigeration cycle of air-conditioning equipment for vehicles, there is an advantage that heating can be performed by a heat pump that consumes less power than an electric heater. Examples of the "air-conditioning equipment for vehicles include systems for gasoline vehicles, hybrid vehicles, electric vehicles, and hydrogen vehicles.

The refrigerant (13) has a refrigerating capacity ratio relative to R404A of 100% or more, and a COP ratio relative to R404A of 112.2% or more.

The refrigerant (14) has a refrigerating capacity ratio relative to R404A of 103% or more, and a COP ratio relative to R404A of 111% or more.

The refrigerant (15) has a refrigerating capacity ratio relative to R404A of 112% or more, and a discharge pressure ratio relative to R404A of 100% or more.

The refrigerant (16) has a refrigerating capacity ratio relative to R404A of 122% or more, and a COP ratio relative to R404A of 108.0% or more.

The refrigerant (17) has a refrigerating capacity ratio relative to R404A of 131% or more, and a COP ratio relative to R404A of 106.5% or more.

The refrigerant (18) has condensation glide of 4.0 K or less, and a COP ratio relative to R404A of 105% or more.

The refrigerant (19) has a refrigerating capacity ratio relative to R404A of 140% or more, and a COP ratio relative to R404A of 104.2% or more.

The refrigerant (20) has a refrigerating capacity ratio relative to R404A of 157% or more, and a disproportionation reaction does not occur even at 3 Mpa and 150°C of the refrigerant.

The refrigerant of the present disclosure may be an alternative refrigerant for R404A, comprising HFO-1132(E) and propane in an amount of 99.5% or more, comprising HFO-1132(E) in an amount of 7.0 mass% to 75.0 mass% based on a total amount of HFO-1132(E) and propane, and comprising at least one member selected from HFO-1132a and R124 in an amount of 0.5 mass% or less. This refrigerant has a refrigerating capacity ratio relative to R404A of 100% or more, and a disproportionation reaction does not occur even at 3 Mpa and 150°C of the refrigerant.

In the refrigerant of the present disclosure, the refrigerant comprises HFO-1132(E), difluoroethylene (R32) and propane, a total content of HFO-1132(E), R32, and propane is 99.5 mass% or more based on a total amount of the refrigerant, and

when the mass% of HFO-1132(E), R32, and propane based on their sum are respectively represented by x, y, and z, if coordinates (x,y,z) in a ternary composition diagram in which the sum of HFO-1132(E), R32, and propane is 100 mass% satisfy the following requirements, a disproportionation reaction does not occur at 3 Mpa and 150°C, a refrigerating capacity (Cap) ratio relative to R410A is 70% or more, and GWP is 300 or less:

the coordinates (x,y,z) are within the range of a figure surrounded by straight lines CP, PQ, QR, RA, and AC that connect the following 5 points:

point C (60.0, 40.0, 0.0),
point P (73.1, 5.0, 21.9),
point Q (10.0, 5.0, 85.0),
point R (10.0, 44.2, 45.8), and
point A (55.7, 44.3, 55.8), or

on the straight lines CP, QR, and RA (excluding the points A, C, P, and Q).

In the refrigerant of the present disclosure, the refrigerant comprises HFO-1132(E), difluoroethylene (R32) and propane, a total content of HFO-1132(E), R32, and propane is 99.5 mass% or more based on a total amount of the refrigerant, and

when the mass% of HFO-1132(E), R32, and propane based on their sum are respectively represented by x, y, and z, if coordinates (x,y,z) in a ternary composition diagram in which the sum of HFO-1132(E), R32, and propane is 100 mass% satisfy the following requirements, a disproportionation reaction does not occur at 3 Mpa and 150°C, a refrigerating capacity (Cap) ratio relative to R1234yf is 197.5% or more, a refrigerating capacity (Cap) ratio relative to R404A is 110% or more, and GWP is 150 or less:

the coordinates (x,y,z) are within the range of a figure surrounded by straight lines PQ, QR, KJ, and JP that connect the following 4 points:

point P (73.1, 5.0, 21.9),
point Q (10.0, 5.0, 85.0),
point K (10.0, 21.9, 68.1), and
point J (66.7, 22.1, 11.2), or

on the straight lines JP, QK, and KJ.

In addition, since the refrigerant of the present disclosure has a boiling point of -40.0°C or lower, there is an advantage that the refrigerant is easy to use in heating by a heat pump. For example, when the refrigerant of the present disclosure is used for operating a refrigeration cycle of air-conditioning equipment for vehicles, there is an advantage that heating can be performed by a heat pump that consumes less power than an electric heater. Examples of the air-conditioning equipment for vehicles include systems for gasoline vehicles, hybrid vehicles, electric vehicles, and hydrogen vehicles.

In the refrigerant of the present disclosure, the refrigerant comprises HFO-1132(E), R32, propane, and carbon dioxide ($CO_2$), a total content of HFO-1132(E), R32, propane, and $CO_2$ is 99.5 mass% or more based on a total amount of the refrigerant, and

when the mass% of $CO_2$, HFO-1132(E), R32, and propane based on their sum are respectively represented by a, x, y, and z, if coordinates (x,y,z) in a ternary composition diagram in which the sum of HFO-1132(E), R32, and propane is (100-a) mass% satisfy the following requirements, a disproportionation reaction does not occur at 3 Mpa and 150°C, a refrigerating capacity (Cap) ratio relative to R410A is 65.0% or more, and GWP is 300 or less:

the coordinates (x,y,z) are, when $0.0 < a \leq 10.0$, within the range of a figure surrounded by straight lines C'D', D'Q', Q'R', R'A', and A'C' that connect the following 5 points:

point C' (60.0, -a+40.0, 0.0),
point D' (75.0, 0, -a+25.0),
point Q' (10.0, 0.0, -a+90.0),
point R' (10.0, 44.2, -a+45.8), and
point A' (-a+55.7, 44.3, 0.0), or

on the straight lines C'D', Q'R', and R'A' (excluding the points A', C', D', and Q').

In the refrigerant of the present disclosure, the refrigerant comprises HFO-1132(E), R32, propane, and $CO_2$, a

total content of HFO-1132(E), R32, propane, and $CO_2$ is 99.5 mass% or more based on a total amount of the refrigerant, and

when the mass% of $CO_2$, HFO-1132(E), R32, and propane based on their sum are respectively represented by a, x, y, and z, if coordinates (x,y,z) in a ternary composition diagram in which the sum of HFO-1132(E), R32, and propane is (100-a) mass% satisfy the following requirements, a disproportionation reaction does not occur at 3 Mpa and 150°C, a refrigerating capacity (Cap) ratio relative to R1234yf is 185.0% or more, a refrigerating capacity (Cap) ratio relative to R404A is 103.7% or more, and GWP is 150 or less:

the coordinates (x,y,z) are, when $0.0 < a \leq 0.5$, within the range of a figure surrounded by straight lines J'D', D'Q', Q'K', and K'J' that connect the following 4 points:

point J' (66.7, 22.1, -a+11.2),
point D' (75.0, 0.0, -a+25.0),
point Q' (10.0, 0.0, -a+90.0), and
point K' (10.0, 21.9, -a+68.1), or

on the straight lines J'D', Q'K', and K'J', and
the coordinates (x,y,z) are, when $0.5 < a \leq 10.0$, within the range of a figure surrounded by straight lines J'D', D'Q', Q'K', and K'J' that connect the following 4 points:

point J' ($-0.0524a^2+0.266a+66.58$, 22.1, $0.0524a^2-1.266a+11.32$),
point D' (75.0, 0.0, -a+25.0),
point Q' (10.0, 0.0, -a+90.0), and
point K' (10.0, 21.9, -a+68.1), or

on the straight lines J'D', Q'K', and K'J'.

In addition, since the refrigerant of the present disclosure has a boiling point of -40.0°C or lower, there is an advantage that the refrigerant is easy to use in heating by a heat pump. For example, when the refrigerant of the present disclosure is used for operating a refrigeration cycle of air-conditioning equipment for vehicles, there is an advantage that heating can be performed by a heat pump that consumes less power than an electric heater. Examples of the air-conditioning equipment for vehicles include systems for gasoline vehicles, hybrid vehicles, electric vehicles, and hydrogen vehicles.

Besides, the refrigerant of the present disclosure is a mixed refrigerant comprising propane and HFO-1132(E), and/or R32 having lower flammability than propane, and/or $CO_2$, but is not a non-flammable refrigerant or a low-flammable refrigerant. Therefore, in a refrigeration apparatus comprising a use side heat transfer cycle for circulating a use side refrigerant, a heat source side heat transfer cycle for circulating a heat source side refrigerant, and a cascade heat exchanger for performing heat exchange between the use side refrigerant and the heat source side refrigerant, the refrigerant of the present disclosure may be used as the heat source side refrigerant.

The refrigerant of the present disclosure may further comprise additional refrigerants in addition to the above-described refrigerant as long as the properties and effects described above are not impaired. In this respect, the refrigerant of the present disclosure according to one embodiment preferably comprises HFO-1132(E) and propane, and R32 and/or $CO_2$ if necessary, in a total amount of 99.5 mass% or more, more preferably 99.75 mass% or more, still more preferably 99.9 mass% or more, further preferably 99.999 mass%, and most preferably 99.9999 mass% or more, based on the entire refrigerant. The refrigerant of the present disclosure may substantially consist only of HFO-1132 (E) and propane, and R32 and/or $CO_2$ if necessary, and in this case, the refrigerant of the present disclosure may also consist only of HFO-1132(E) and propane, and R32 and/or $CO_2$ if necessary, and an unavoidable impurity. The refrigerant of the present disclosure may consist only of HFO-1132(E) and propane, and R32 and/or $CO_2$ if necessary.

Additional refrigerants are not particularly limited and can be widely selected. The mixed refrigerant may contain one additional refrigerant, or two or more additional refrigerants.

Examples of the additional refrigerant include acetylene, HFO-1141, HFO-1123, HFC-143a, HFC-134a, Z-HFO-1132, HFO-1243zf, HFC-245cb, HCFC-1122, CFC-1113, 3,3,3-trifluoropropyne, and R152a.

2. Refrigerant Composition

The refrigerant composition according to the present disclosure comprises at least the refrigerant according to the present disclosure, and can be used for the same use as the refrigerant according to the present disclosure. Moreover, the refrigerant composition according to the present disclosure can be further mixed with at least a refrigeration oil to thereby obtain a working fluid for a refrigerating machine.

The refrigerant composition according to the present disclosure further comprises at least one other component in addition to the refrigerant according to the present disclosure. The refrigerant composition according to the present disclosure may comprise at least one of the following other components, if necessary. As described above, when the refrigerant composition according to the present disclosure is used as a working fluid in a refrigerating machine, it is generally used as a mixture with at least a refrigeration oil. Therefore, it is preferable that the refrigerant composition according to the present disclosure does not substantially comprise a refrigeration oil. Specifically, in the refrigerant composition according to the present disclosure, the content of the refrigeration oil based on the entire refrigerant composition is preferably 1 mass% or less, and more preferably 0.1 mass% or less.

2.1. Water

The refrigerant composition according to the present disclosure may contain a small amount of water. The water content of the refrigerant composition is preferably 0.1 mass% or less based on the entire refrigerant. A small amount of water contained in the refrigerant composition stabilizes double bonds in the molecules of unsaturated fluorocarbon compounds that can be present in the refrigerant, and makes it less likely that the unsaturated fluorocarbon compounds will be oxidized, thus increasing the stability of the refrigerant composition.
The composition of the present disclosure also includes a composition comprising a refrigerant, the refrigerant comprising HFO-1132(E) and propane, and R32 and/or $CO_2$ if necessary, and 0.1% or less of water.

2.2. Tracer

A tracer is added to the refrigerant composition according to the present disclosure at a detectable concentration so that when the refrigerant composition has been diluted, contaminated, or undergone other changes, the tracer can trace the changes.
The refrigerant composition according to the present disclosure may comprise a single tracer, or two or more tracers.
The tracer is not limited, and can be suitably selected from commonly used tracers.
Examples of tracers include hydrofluorocarbons, hydrochlorofluorocarbons, chlorofluorocarbons, hydrochlorocarbons, fluorocarbons, deuterated hydrocarbons, deuterated hydrofluorocarbons, perfluorocarbons, fluoroethers, brominated compounds, iodinated compounds, alcohols, aldehydes, ketones, and nitrous oxide ($N_2O$) . The tracer is particularly preferably a hydrofluorocarbon, a hydrochlorofluorocarbon, a chlorofluorocarbon, a hydrochlorocarbon, a fluorocarbon, or a fluoroether.
The following compounds are preferable as the tracer.

FC-14 (tetrafluoromethane, $CF_4$)
HCC-40 (chloromethane, $CH_3Cl$)
HFC-23 (trifluoromethane, $CHF_3$)
HFC-41 (fluoromethane, $CH_3F$)
HFC-125 (pentafluoroethane, $CF_3CHF_2$)
HFC-134a (1,1,1,2-tetrafluoroethane, $CF_3CH_2F$)
HFC-134 (1,1,2,2-tetrafluoroethane, $CHF_2CHF_2$)
HFC-143 (1,1,2-trifluoroethane, $CHF_2CH_2F$)
HFC-152a (1,1-difluoroethane, $CHF_2CH_3$)
HFC-152 (1,2-difluoroethane, $CH_2FCH_2F$)
HFC-161 (fluoroethane, $CH_3CH_2F$)
HFC-245fa (1,1,1,3,3-pentafluoropropane, $CF_3CH_2CHF_2$)
HFC-236fa (1,1,1,3,3,3-hexafluoropropane, $CF_3CH_2CF_3$)
HFC-236ea (1,1,1,2,3,3-hexafluoropropane, $CF_3CHFCHF_2$)
HFC-227ea (1,1,1,2,3,3,3-heptafluoropropane, $CF_3CHFCF_3$)
HCFC-22 (chlorodifluoromethane, $CHClF_2$)
HCFC-31 (chlorofluoromethane, $CH_2ClF$)
HFE-125 (trifluoromethyl-difluoromethyl ether, $CF_3OCHF_2$)
HFE-134a (trifluoromethyl-fluoromethyl ether, $CF_3OCH_2F$)
HFE-143a (trifluoromethyl-methyl ether, $CF_3OCH_3$)
HFE-227ea (trifluoromethyl-tetrafluoroethyl ether, $CF_3OCHFCF_3$)
HFE-236fa (trifluoromethyl-trifluoroethyl ether, $CF_3OCH_2CF_3$)

The refrigerant composition of the present disclosure may comprise about 10 parts per million by weight (ppm) or more of tracers in total, based on the entire refrigerant composition. The refrigerant composition of the present disclosure may also comprise about 1000 ppm or less of tracers in total, based on the entire refrigerant composition. The refrigerant composition of the present disclosure may preferably comprise about 30 ppm or more and more preferably about 50 ppm or more of tracers in total, based on the entire refrigerant composition. The refrigerant composition of the present disclosure may preferably comprise about 500 ppm or less and about 300 ppm or less of tracer in total, based on the entire refrigerant composition.

## 2.3. Ultraviolet Fluorescent Dye

The refrigerant composition according to the present disclosure may comprise a single ultraviolet fluorescent dye, or two or more ultraviolet fluorescent dyes.

The ultraviolet fluorescent dye is not limited, and can be suitably selected from commonly used ultraviolet fluorescent dyes.

Examples of ultraviolet fluorescent dyes include naphthalimide, coumarin, anthracene, phenanthrene, xanthene, thioxanthene, naphthoxanthene, fluorescein, and derivatives thereof. The ultraviolet fluorescent dye is particularly preferably either naphthalimide or coumarin, or both.

## 2.4. Stabilizer

The refrigerant composition according to the present disclosure may comprise a single stabilizer, or two or more stabilizers.

The stabilizer is not limited, and can be suitably selected from commonly used stabilizers.

Examples of stabilizers include nitro compounds, ethers, and amines.

Examples of nitro compounds include aliphatic nitro compounds, such as nitromethane and nitroethane; and aromatic nitro compounds, such as nitro benzene and nitro styrene.

Examples of ethers include 1,4-dioxane.

Examples of amines include 2,2,3,3,3-pentafluoropropylamine and diphenylamine.

Examples of stabilizers also include butylhydroxyxylene and benzotriazole.

The content of the stabilizer is preferably 0.01 mass% or more, and more preferably 0.05 mass% or more, based on the entire refrigerant. The content of the stabilizer is preferably 5 mass% or less, and more preferably 2 mass% or less, based on the entire refrigerant.

## 2.5. Polymerization Inhibitor

The refrigerant composition according to the present disclosure may comprise a single polymerization inhibitor, or two or more polymerization inhibitors.

The polymerization inhibitor is not limited, and can be suitably selected from commonly used polymerization inhibitors.

Examples of polymerization inhibitors include 4-methoxy-1-naphthol, hydroquinone, hydroquinone methyl ether, dimethyl-t-butylphenol, 2,6-di-tert-butyl-p-cresol, and benzotriazole.

The content of the polymerization inhibitor is preferably 0.01 mass% or more, and more preferably 0.05 mass% or more, based on the entire refrigerant. The content of the polymerization inhibitor is preferably 5 mass% or less, and more preferably 2 mass% or less, based on the entire refrigerant.

## 3. Refrigeration-Oil-Containing Working Fluid

The refrigeration-oil-containing working fluid according to the present disclosure comprises at least the refrigerant or refrigerant composition according to the present disclosure and a refrigeration oil, for use as a working fluid in a refrigerating machine. Specifically, the refrigeration-oil-containing working fluid according to the present disclosure is obtained by mixing a refrigeration oil used in a compressor of a refrigerating machine with the refrigerant or the refrigerant composition. The refrigeration-oil-containing working fluid generally comprises 10 mass% or more of refrigeration oil. The refrigeration-oil-containing working fluid generally comprises 50 mass% or less of refrigeration oil.

## 3.1. Refrigeration Oil

The refrigerant composition according to the present disclosure may comprise a single refrigeration oil, or two or more refrigeration oils.

The refrigeration oil is not limited, and can be suitably selected from commonly used refrigeration oils. In this case, refrigeration oils that are superior in the action of increasing the miscibility with the mixture and the stability of the mixture, for example, are suitably selected as necessary.

The base oil of the refrigeration oil is preferably, for example, at least one member selected from the group consisting of polyalkylene glycols (PAG), polyol esters (POE), and polyvinyl ethers (PVE).

The refrigeration oil may further contain additives in addition to the base oil. The additive may be at least one member selected from the group consisting of antioxidants, extreme-pressure agents, acid scavengers, oxygen scavengers, copper deactivators, rust inhibitors, oil agents, and antifoaming agents.

A refrigeration oil with a kinematic viscosity of 5 cSt or more at 40°C is preferable from the standpoint of lubrication. A refrigeration oil with a kinematic viscosity of 400 cSt or less at 40°C is preferable from the standpoint of lubrication.

The refrigeration-oil-containing working fluid according to the present disclosure may further optionally contain at least one additive. Examples of additives include compatibilizing agents described below.

### 3.2. Compatibilizing Agent

The refrigeration-oil-containing working fluid according to the present disclosure may comprise a single compatibilizing agent, or two or more compatibilizing agents.

The compatibilizing agent is not limited, and can be suitably selected from commonly used compatibilizing agents.

Examples of compatibilizing agents include polyoxyalkylene glycol ethers, amides, nitriles, ketones, chlorocarbons, esters, lactones, aryl ethers, fluoroethers, and 1,1,1-trifluoroalkanes. The compatibilizing agent is particularly preferably a polyoxyalkylene glycol ether.

### 3.3. Use

The refrigerant, the refrigerant composition, and the refrigeration-oil-containing working fluid of the present disclosure can be used as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

### 4. Method for Operating Refrigerating Machine

The method for operating a refrigerating machine according to the present disclosure is a method for operating a refrigerating machine using the refrigerant according to the present disclosure.

Specifically, the method for operating a refrigerating machine according to the present disclosure comprises the step of circulating the refrigerant according to the present disclosure in a refrigerating machine.

### 5. Method for suppressing disproportionation reaction

The method for suppressing the disproportionation reaction is a method for suppressing a disproportionation reaction of HFO-1132(E), comprising the step of operating a refrigeration cycle using the refrigerant of the present disclosure.

In the method for suppressing the disproportionation reaction of the present disclosure, particularly, it is possible to obtain an effect that the disproportionation reaction of HFO-1132 (E) does not occur even when the refrigerant pressure is 3.0 MPa and the refrigerant temperature is 150°C.

According to the method for suppressing a disproportionation reaction of the present disclosure, it is possible to operate a refrigeration cycle while suppressing a disproportionation reaction even in a refrigerating machine that is not specifically provided with a means for suppressing the disproportionation reaction.

### 6. Use for suppressing disproportionation reaction

The use of the present disclosure is the use of propane, and/or R32, and/or $CO_2$ for suppressing a disproportionation reaction of HFO-1132(E), wherein the suppression of the disproportionation reaction is carried out by mixing HFO-1132(E), propane, and/or R32, and/or $CO_2$ at a mixing ratio of the refrigerant of the present disclosure.

In the use for suppressing the disproportionation reaction of the present disclosure, particularly, it is possible to obtain an effect that the disproportionation reaction of HFO-1132 (E) does not occur even when the refrigerant pressure is 3.0 MPa and the refrigerant temperature is 150°C.

The embodiments are described above; however, it will be understood that various changes in form and detail can be made without departing from the spirit and scope of the claims.

Examples

The present disclosure is described in more detail below with reference to Examples. However, the present disclosure is not limited to the Examples.

Mixed refrigerants were prepared by mixing HFO-1132(E), propane, and/or R32, and/or $CO_2$ at mass% based on their sum shown in respective tables.

Each of these mixed refrigerants was examined for disproportionation reactions under the following test methods and conditions.

Test Method

A refrigerant composition to be tested was transferred into a test container and heated to 150°C, and then a voltage was applied to a Pt wire in the container to fuse the wire, thereby applying energy of 30 J to the refrigerant composition. The occurrence of the disproportionation reaction was determined by a rapid increase in pressure and temperature in the apparatus.

Test Conditions

Test container: 38 cc, made of stainless steel (SUS),
Test temperature: 150°C
Pressure: 3 MPa
Evaluation Criteria
"Non-explosion": the temperature or pressure after the fusion of the Pt wire is less than 2 times, and no rapid disproportionation reaction occurs.
"Explosion": the temperature or pressure after the fusion of the Pt wire reaches twice or more and a rapid disproportionation reaction occurs

[Table 1]

| Item | Unit | Experiment series 1 | | | Experiment series 2 | | | | | Experiment series 3 | | |
|---|---|---|---|---|---|---|---|---|---|---|---|---|
| | | Sam.1-1 | Sam.1-2 | Sam.1-3 | Sam.2-1 | Sam.2-2 | Sam.2-3 | Sam.2-4 | Sam.2-5 | Sam.3-1 | Sam.3-2 | Sam.3-3 |
| HFO-1132 (E) | mass% | 62.0 | 60.0 | 58.0 | 69.5 | 69.5 | 67.5 | 65.5 | 65.5 | 77.0 | 75.0 | 73.0 |
| R32 | mass% | 38.0 | 40.0 | 42.0 | 20.0 | 18.0 | 20.0 | 20.0 | 22.0 | 0.0 | 0.0 | 0.0 |
| Propane | mass% | 0.0 | 0.0 | 0.0 | 10.5 | 12.5 | 12.5 | 14.5 | 12.5 | 23.0 | 25.0 | 27.0 |
| disproportionation reaction (3Mpa) | - | Explosion | Non-explosion | Non-explosion | Explosion | Explosion | Non-explosion | Non-explosion | Non-explosion | Explosion | Non-explosion | Non-explosion |

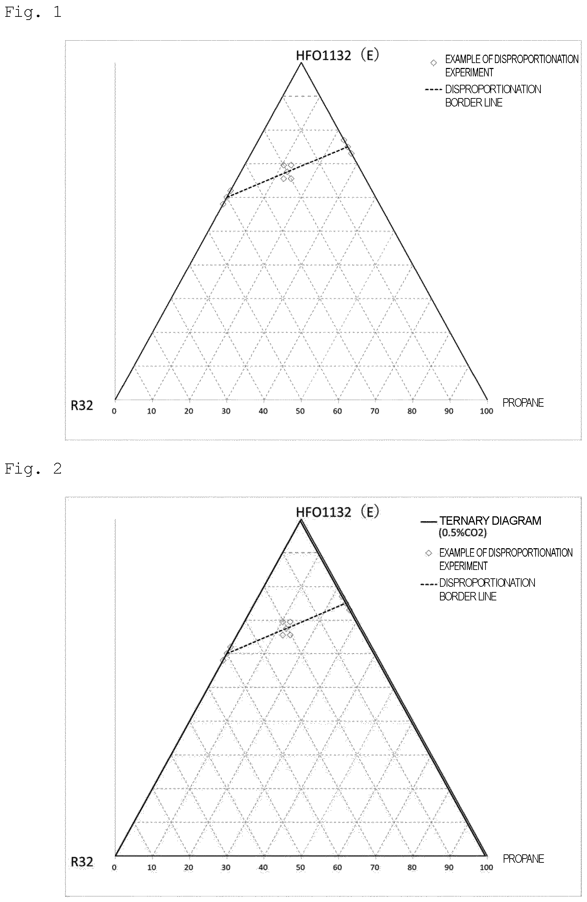

The results in Table 1 and Fig. 1 indicate that the mixture of HFO-1132(E), R32, and propane does not undergo a disproportionation reaction even at 3 Mpa and 150°C of the refrigerant in a region below a disproportionation border line shown in the ternary diagram of Figure 1.

[Table 2]

| Item | Unit | Experiment series1 | | | Experiment series2 | | | | | Experiment series3 | | |
|---|---|---|---|---|---|---|---|---|---|---|---|---|
| | | Sam.1-4 | Sam.1-5 | Sam.1-6 | Sam.2-6 | Sam.2-7 | Sam.2-8 | Sam.2-9 | Sam.2-10 | Sam.3-4 | Sam.3-5 | Sam.3-6 |
| HFO-1132 (E) | mass% | 62.0 | 60.0 | 58.0 | 69.5 | 69.5 | 67.5 | 65.5 | 65.5 | 77.0 | 75.0 | 73.0 |
| R32 | mass% | 37.5 | 39.5 | 41.5 | 19.75 | 17.75 | 19.75 | 19.75 | 21.75 | 0.0 | 0.0 | 0.0 |
| Propane | mass% | 0.0 | 0.0 | 0.0 | 10.25 | 12.25 | 12.25 | 14.25 | 12.25 | 22.5 | 24.5 | 26.5 |
| $CO_2$ | mass% | 0.5 | 0.5 | 0.5 | 0.5 | 0.5 | 0.5 | 0.5 | 0.5 | 0.5 | 0.5 | 0.5 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

[Table 3]

| Item | Unit | Experiment series1 | | | Experiment series2 | | | | | Experiment series3 | | |
|---|---|---|---|---|---|---|---|---|---|---|---|---|
| | | Sam.1-7 | Sam.1-8 | Sam.1-9 | Sam.2-10 | Sam.2-11 | Sam.2-12 | Sam.2-13 | Sam.2-14 | Sam.3-7 | Sam.3-8 | Sam.3-9 |
| HFO-1132 (E) | mass% | 62.0 | 60.0 | 58.0 | 69.5 | 69.5 | 67.5 | 65.5 | 65.5 | 77.0 | 75.0 | 73.0 |
| R32 | mass% | 33.0 | 35.0 | 37.0 | 17.50 | 15.50 | 17.50 | 17.50 | 19.50 | 0.0 | 0.0 | 0.0 |
| Propane | mass% | 0.0 | 0.0 | 0.0 | 8.00 | 10.00 | 10.00 | 12.00 | 10.00 | 18.0 | 20.0 | 22.0 |
| $CO_2$ | mass% | 5.0 | 5.0 | 5.0 | 5.0 | 5.0 | 5.0 | 5.0 | 5.0 | 5.0 | 5.0 | 5.0 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

[Table 4]

| Item | Unit | Experiment series1 | | | Experiment series2 | | | | | Experiment series3 | | |
|---|---|---|---|---|---|---|---|---|---|---|---|---|
| | | Sam.1-10 | Sam.1-11 | Sam.1-12 | Sam.2-15 | Sam.2-16 | Sam.2-17 | Sam.2-18 | Sam.2-19 | Sam.3-10 | Sam.3-11 | Sam.3-12 |
| HFO-1132 (E) | mass% | 62.0 | 60.0 | 58.0 | 69.5 | 69.5 | 67.5 | 65.5 | 65.5 | 77.0 | 75.0 | 73.0 |
| R32 | mass% | 28.0 | 30.0 | 32.0 | 15.00 | 13.00 | 15.00 | 15.00 | 17.00 | 0.0 | 0.0 | 0.0 |
| Propane | mass% | 0.0 | 0.0 | 0.0 | 5.50 | 7.50 | 7.50 | 9.50 | 7.50 | 13.0 | 15.0 | 17.0 |
| $CO_2$ | mass% | 10.0 | 10.0 | 10.0 | 10.0 | 10.0 | 10.0 | 10.0 | 10.0 | 10.0 | 10.0 | 10.0 |
| Disproportionation reaction(3Mpa) | - | Explosion | Non-explosion | Non-explosion | Explosion | Explosion | Non-explosion | Non-explosion | Non-explosion | Explosion | Non-explosion | Non-explosion |

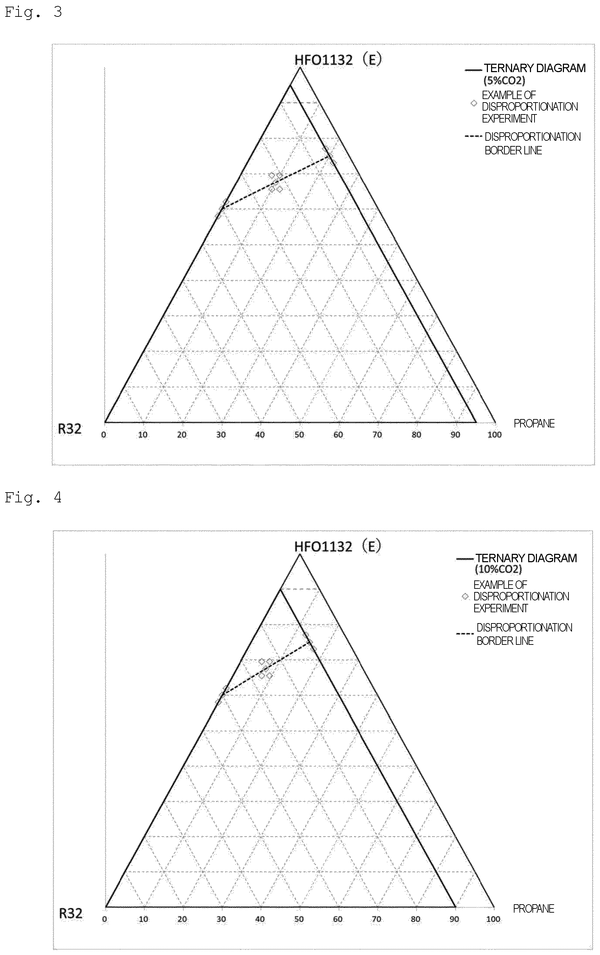

The results in Tables 2, 3, and 4 and Figs. 2, 3, and 4 indicate that the mixture of HFO-1132(E), R32, propane, and $CO_2$ does not undergo a disproportionation reaction even at 3 Mpa and 150°C of the refrigerant in regions below disproportionation border lines shown in the ternary diagrams of Figures 2, 3, and 4.

Mixed refrigerants were prepared by mixing HFO-1132(E), propane, and/or R32, and/or $CO_2$ at mass% based on their sum shown in respective tables.

These mixed refrigerants were evaluated for various physical properties under the following test methods and test conditions.

The GWP of HFO-1132(E) was set to 1, and the GWP of mixed refrigerants was evaluated with the GWP of propane, R32, and $CO_2$ based on the values stated in the Intergovernmental Panel on Climate Change (IPCC), fourth report. The COP, refrigerating capacity, discharge temperature, and boiling point of mixed refrigerants were determined by performing theoretical refrigeration cycle calculations for the mixed refrigerants using the National Institute of Science and Technology (NIST) and Reference Fluid Thermodynamic and Transport Properties Database (Refprop 10.0) under the following conditions. The physical property data of HFO-1132 (E) were determined from measured values.

<Ratio relative to R410A>

**[0109]**

　　　Evaporating temperature: 5°C
　　　Condensation temperature: 45°C
　　　Superheating temperature: 5K
　　　Subcooling temperature: 5K
　　　Compressor efficiency: 70%

<Ratio relative to R410A>

**[0110]**

　　　Evaporation temperature: -30°C
　　　Condensation temperature: 30°C
　　　Superheating temperature: 5K
　　　Subcooling temperature: 5K
　　　Compressor efficiency: 70%

<Ratio relative to R410A>

**[0111]**

　　　Evaporation temperature: -40°C
　　　Condensation temperature: 40°C
　　　Superheating temperature: 20K
　　　Subcooling temperature: 0K
　　　Compressor efficiency: 70%

The coefficient of performance (COP)was determined according to the following equation.

$$\mathtt{COP\ =\ (refrigerating\ capacity)/power\ consumption}$$

In Tables 5 and 6, "COP ratio", "Refrigerating capacity ratio" and "Discharge pressure ratio" each indicate a proportion (%) relative to R410A.

[Table 5]

| Item | Unit | Com.Ex.1-1 | Com.Ex.1-2 | Com.Ex.1-3 | Com.Ex.1-4 | Ex.1-1 | Ex.1-2 | Ex.1-3 | Ex.1-4 | Ex.1-5 | Ex.1-6 |
|---|---|---|---|---|---|---|---|---|---|---|---|
| E-HFO-1132 | mass% | R410A | 0.0 | 10.0 | 20.0 | 25.0 | 29.2 | 30.7 | 38.9 | 43.5 | 48.5 |
| Propane | mass% | | 100.0 | 90.0 | 80.0 | 75.0 | 70.8 | 69.3 | 62.1 | 56.5 | 51.5 |
| GWP | - | 2088 | 3 | 3 | 3 | 3 | 2 | 2 | 2 | 2 | 2 |
| COP ratio | % (relative to R410A) | 100.0 | 106.2 | 104.9 | 104.1 | 103.7 | 103.25 | 103.1 | 102.0 | 101.3 | 100.5 |
| Refrigerating capacity ratio | % (relative to R410A) | 100.0 | 58.4 | 64.4 | 70.2 | 73.0 | 75.2 | 76.0 | 80.0 | 82.3 | 84.7 |
| Condensation glide | K | 0.1 | 0.0 | 3.9 | 5.8 | 6.2 | 6.2 | 6.2 | 5.6 | 5.0 | 4.2 |
| Disproportionation reaction(3Mpa) | | - | - | - | - | - | - | - | - | - | - |

20

[Table 6]

| Item | Unit | Ex. 1-7 | Ex. 1-8 | Ex.1-9 | Ex.1-10 | Ex.1-11 | Ex.1-12 | Com.Ex.1-5 |
|---|---|---|---|---|---|---|---|---|
| E-HFO-1132 | mass% | 51.2 | 56.3 | 61.4 | 66.8 | 72.4 | 75.0 | 80.0 |
| Propane | mass% | 48.8 | 43.7 | 38.6 | 33.2 | 27.6 | 25.0 | 20.0 |
| GWP | - | 2 | 2 | 2 | 2 | 2 | 2 | 1 |
| COP ratio | % (relative to R410A) | 100.13 | 99.50 | 99.04 | 98.75 | 98.60 | 98.58 | 98.63 |
| Refrigerating capacity ratio | % (relative to R410A) | 85.9 | 88.3 | 90.6 | 92.9 | 95.0 | 95.9 | 97.3 |
| Condensation glide | K | 3.7 | 2.9 | 2.0 | 1.2 | 0.6 | 0.4 | 0.1 |
| Disproportionation reaction(3Mpa) | | - | - | - | - | Non-explosion | Non-explosion | Explosion |

The results in Tables 5 and 6 indicate the following.

The refrigerant (1) has a refrigerating capacity ratio relative to R410A of 73% or more, and a COP ratio relative to R410A of 103.25% or more.

The refrigerant (2) has a refrigerating capacity ratio relative to R410A of 76% or more, and a COP ratio relative to R410A of 102% or more.

The refrigerant (3) has condensation glide of 5.0 K or less, and a COP ratio relative to R410A of 100.5% or more.

The refrigerant (4) has condensation glide of 3.75 K or less, and a COP ratio relative to R410A of 99.5% or more.

The refrigerant (5) has condensation glide of 2.0 K or less, and a COP ratio relative to R410A of 98.75% or more.

The refrigerant (6) has a refrigerating capacity ratio relative to R410A of 95% or more, and a disproportionation reaction does not occur even at 3 Mpa and 150°C of the refrigerant.

Besides, influence of mixture of various impurities was evaluated as shown in Table 7.

[Table 7]

| Item | Unit | Com.Ex.1-1 | Ex.1-13 | Ex.1-14 | Ex.1-15 |
|---|---|---|---|---|---|
| E-HFO-1132 | mass% | R410A | 65.0 | 65.0 | 65.0 |
| Propane | mass% | | 35.0 | 34.6 | 34.6 |
| R1132a | mass% | | 0.0 | 0.4 | 0.0 |
| R124 | mass% | | 0.0 | 0.0 | 0.4 |
| GWP | - | 2088 | 2 | 2 | 4 |
| COP ratio | % (relative to R410A) | 100.0 | 98.8 | 98.8 | 97.7 |
| Refrigerating capacity ratio | % (relative to R410A) | 100.0 | 92.1 | 92.4 | 93.6 |
| Condensation glide | K | 0.1 | 1.4 | 1.4 | 1.7 |
| Disproportionation reaction(3Mpa) | | - | - | Non-explosion | Non-explosion |

The results in Table 7 indicate that the refrigerant of the present disclosure may be an alternative refrigerant for R410A comprising HFO-1132(E) and propane in an amount of 99.5% or more, comprising HFO-1132(E) in an amount of 25.0 mass% to 75 mass% based on a total amount of HFO-1132(E) and propane, and comprising at least one member selected from the group consisting of HFO-1132a and R124 in an amount of 0.5 mass% or less. This refrigerant has a refrigerating capacity ratio relative to R410A of 73% or more, and a disproportionation reaction does not occur even at 3 Mpa and 150°C of the refrigerant.

The results in Table 7 indicate that the refrigerant of the present disclosure comprises HFO-1132(E) and propane in an amount of 99.5% or more, and may comprise at least one member selected from HFO-1132a and R124 in an amount of 0.5 mass% or less.

Mixed refrigerants were prepared by mixing HFO-1132(E) and propane at mass% based on their sum shown in Tables 8 and 9.

[Table 8]

| Item | Unit | Com. Ex.2-1 | Com.Ex.2-2 | Com.Ex.2-3 | Ex.2-1 | Ex.2-2 | Ex.2-3 | Ex.2-4 | Ex.2-5 | Ex.2-6 | Ex.2-7 |
|---|---|---|---|---|---|---|---|---|---|---|---|
| E-HFO-1132 | mass% | R1234yf | 0.0 | 10.0 | 20.6 | 29.9 | 32.0 | 37.0 | 42.2 | 48.8 | 50.4 |
| Propane | mass% | | 100.0 | 90.0 | 79.4 | 70.1 | 68.0 | 63.0 | 57.8 | 51.2 | 49.6 |
| GWP | - | 4 | 3 | 3 | 3 | 2 | 2 | 2 | 2 | 2 | 2 |
| COP ratio | % (relative to R1234yf) | 100.0 | 104.3 | 103.2 | 102.6 | 102.0 | 101.9 | 101.5 | 101.0 | 100.25 | 100.1 |
| Refrigerating capacity ratio | % (relative to R1234yf) | 100.0 | 164.4 | 181.4 | 200.0 | 216.4 | 220.0 | 228.5 | 237.0 | 247.5 | 250.0 |
| Condensation glide | K | 0.0 | 0.0 | 4.2 | 6.3 | 6.7 | 6.6 | 6.2 | 5.6 | 4.5 | 4.2 |
| Boiling point | °C | -29.5 | -42.1 | -48.1 | -51.5 | -53.2 | -53.5 | -54.1 | -54.5 | -54.9 | -55.0 |
| Disproportionation reaction(3Mpa) | | - | - | - | - | - | - | - | - | - | |

[Table 9]

| Item | Unit | Ex.2-8 | Ex.2-9 | Ex.2-10 | Ex.2-11 | Ex.2-12 | Com.Ex.2-4 |
|---|---|---|---|---|---|---|---|
| E-HFO-1132 | mass% | 57.0 | 62.3 | 68.0 | 70.8 | 75.0 | 80.0 |
| Propane | mass% | 43.0 | 37.7 | 32.0 | 29.2 | 25.0 | 20.0 |
| GWP | - | 2 | 2 | 2 | 2 | 2 | 1 |
| COP ratio | % (relative to R1234yf) | 99.5 | 99.2 | 99.1 | 99.1 | 99.0 | 99.0 |
| Refrigerating capacity ratio | % (relative to R1234yf) | 260.4 | 268.7 | 276.7 | 280.0 | 283.7 | 286.3 |
| Condensation glide | K | 3.0 | 2.0 | 1.1 | 0.7 | 0.3 | 0.1 |
| Boiling point | °C | -55.2 | -55.4 | -55.5 | -55.6 | -55.6 | -55.5 |
| Disproportionation reaction(3Mpa) | - | - | - | - | Non-explosion | Non-explosion | Explosion |

These mixed refrigerants were evaluated for various physical properties under the same test methods and test conditions as those described above.

In Tables 8 and 9, "COP ratio", and "Refrigerating capacity ratio" each indicate a proportion (%) relative to R1234yf.

The results in Tables 8 and 9 indicate the following.

The refrigerant (7) has a refrigerating capacity ratio relative to R1234yf of 200% or more, and a COP ratio relative to R1234yf of 102.0% or more.

The refrigerant (8) has condensation glide of 6.6 K or less, and a COP ratio relative to R1234yf of 101.5% or more.

The refrigerant (9) has condensation glide of 5.6 K or less, and a COP ratio relative to R1234yf of 100.25% or more.

The refrigerant (10) has a refrigerating capacity ratio relative to R1234yf of 250% or more, and a COP ratio relative to R1234yf of 99.5% or more.

The refrigerant (11) has condensation glide of 2.0 K or less, and a COP ratio relative to R1234yf of 99.1% or more.

The refrigerant (12) has a refrigerating capacity ratio relative to R1234yf of 280% or more, and a disproportionation reaction does not occur even at 3 Mpa and 150°C of the refrigerant.

Besides, influence of mixture of various impurities was evaluated as shown in Table 6.

[Table 10]

| Item | Unit | Com.Ex.2-1 | Ex.2-13 | Ex.2-14 | Ex.2-15 |
|---|---|---|---|---|---|
| E-HFO-1132 | mass% | R1234yf | 65.0 | 65.0 | 65.0 |
| Propane | mass% | | 35.0 | 34.6 | 34.6 |
| R1132a | mass% | | 0.0 | 0.4 | 0.0 |
| R124 | mass% | | 0.0 | 0.0 | 0.4 |
| GWP | - | 4 | 2 | 2 | 4 |
| COP ratio | % (relative to R1234yf) | 100.0 | 99.1 | 99.1 | 98.3 |
| Refrigerating capacity ratio | % (relative to R1234yf) | 100.0 | 272.7 | 273.7 | 279.1 |
| Condensation glide | K | 0.0 | 1.5 | 1.5 | 1.9 |
| Boiling point | °C | -29.5 | -55.5 | -55.6 | -56.6 |
| Disproportionation reaction(3Mpa) | - | - | - | Non-explosion | Non-explosion |

The results in Table 10 indicate that the refrigerant of the present disclosure may be an alternative refrigerant for R1234yf comprising HFO-1132(E) and propane in an amount of 99.5% or more, comprising HFO-1132(E) in an amount of 20.6 mass% to 75.0 mass% based on a total amount of HFO-1132(E) and propane, and comprising at least one member selected from the group consisting of HFO-1132a and R124 in an amount of 0.5 mass% or less. This refrigerant has a refrigerating capacity ratio relative to R1234yf of 200% or more, and a disproportionation reaction does not occur even at 3 Mpa and 150°C of the refrigerant.

The results in Table 10 indicate that the refrigerant of the present disclosure comprises HFO-1132(E) and propane in an amount of 99.5% or more, and may comprise at least one member selected from HFO-1132a and R124 in an amount of 0.5 mass% or less.

Mixed refrigerants were prepared by mixing HFO-1132(E) and propane at mass% based on their sum shown in Tables 11 and 12.

[Table 11]

| Item | Unit | Com.Ex.3-1 | Com.Ex.3-2 | Ex.3-1 | Ex.3-2 | Ex.3-3 | Ex.3-4 | Ex.3-5 | Ex.3-6 | Ex.3-7 | Ex.3-8 |
|---|---|---|---|---|---|---|---|---|---|---|---|
| E-HFO-1132 | mass% | R404A | 0.0 | 7.0 | 9.7 | 10.4 | 18.0 | 20.6 | 29.4 | 31.3 | 38.7 |
| Propane | mass% | | 100.0 | 93.0 | 90.1 | 89.6 | 82.0 | 79.4 | 70.6 | 68.7 | 61.3 |
| GWP | - | 3922 | 3 | 3 | 3 | 3 | 3 | 3 | 2 | 2 | 2 |
| COP ratio | % (relative to R404A) | 100.0 | 113.7 | 112.6 | 112.2 | 112.1 | 111.0 | 110.7 | 109.4 | 109.2 | 108.0 |
| Refrigerating capacity ratio | % (relative to R404A) | 100.0 | 94.3 | 100.0 | 102.4 | 103.0 | 109.6 | 112.0 | 120.2 | 122.0 | 129.2 |
| Discharge pressure ratio | % (relative to R404A) | 100 | 75 | 81 | 84 | 84 | 91 | 93 | 100 | 102 | 108 |
| Condensation glide | K | 0.3 | 0.0 | 3.1 | 4.0 | 4.2 | 5.8 | 6.1 | 6.4 | 6.4 | 5.8 |
| Disproportionation reaction(3Mpa) | | - | - | - | - | - | - | - | - | - | - |

[Table 12]

| Item | Unit | Ex.3-9 | Ex.3-10 | Ex.3-11 | Ex.3-12 | Ex.3-13 | Ex.3-13 | Ex.3-14 | Com.Ex.3-3 |
|---|---|---|---|---|---|---|---|---|---|
| E-HFO-1132 | mass% | 40.6 | 48.5 | 50.8 | 58.8 | 60.1 | 69.2 | 70.3 | 75.0 |
| Propane | mass% | 59.4 | 51.5 | 49.2 | 41.2 | 59.9 | 30.8 | 29.7 | 25.0 |
| GWP | - | 2 | 2 | 2 | 2 | 2 | 2 | 2 | 2 |
| COP ratio | % (relative to R404A) | 107.7 | 106.5 | 106.1 | 105.0 | 106.2 | 104.2 | 104.2 | 104.0 |
| Refrigerating capacity ratio | % (relative to R404A) | 131.0 | 138.5 | 140.6 | 147.9 | 140.0 | 156.3 | 157.0 | 159.2 |
| Discharge pressure ratio | % (relative to R404A) | 109 | 115 | 117 | 123 | 117 | 130 | 131 | 133 |
| Condensation glide | K | 5.6 | 4.4 | 4.0 | 2.5 | 4.1 | 0.9 | 0.8 | 0.4 |
| Disproportionation reaction(3Mpa) | | - | - | - | - | - | Non-explosion | Non-explosion | Explosion |

These mixed refrigerants were evaluated for various physical properties under the same test methods and test conditions as those described above.

In Tables 11 and 12, "COP ratio", "Refrigerating capacity ratio", and "Discharge pressure ratio" each indicate a proportion (%) relative to R404A.

The results in Tables 11 and 12 indicate the following.

The refrigerant (13) has a refrigerating capacity ratio relative to R404A of 100% or more, and a COP ratio relative to R404A of 112.2% or more.

The refrigerant (14) has a refrigerating capacity ratio relative to R404A of 103% or more, and a COP ratio relative to R404A of 111% or more.

The refrigerant (15) has a refrigerating capacity ratio relative to R404A of 112% or more, and a discharge pressure ratio relative to R404A of 100% or more.

The refrigerant (16) has a refrigerating capacity ratio relative to R404A of 122% or more, and a COP ratio relative to R404A of 108.0% or more.

The refrigerant (17) has a refrigerating capacity ratio relative to R404A of 131% or more, and a COP ratio relative to R404A of 106.5% or more.

The refrigerant (18) has condensation glide of 4.0 K or less, and a COP ratio relative to R404A of 105% or more.

The refrigerant (19) has a refrigerating capacity ratio relative to R404A of 140% or more, and a COP ratio relative to R404A of 104.2% or more.

The refrigerant (20) has a refrigerating capacity ratio relative to R404A of 157% or more, and a disproportionation reaction does not occur even at 3 Mpa and 150°C of the refrigerant.

Besides, influence of mixture of various impurities was evaluated as shown in Table 13.

[Table 13]

| Item | Unit | Com.Ex.3-1 | Ex.3-13 | Ex.3-14 | Ex.3-15 |
|---|---|---|---|---|---|
| E-HFO-1132 | mass% | R404A | 65.0 | 65.0 | 65.0 |
| Propane | mass% | | 35.0 | 34.6 | 34.6 |
| R1132a | mass% | | 0.0 | 0.4 | 0.0 |
| R124 | mass% | | 0.0 | 0.0 | 0.4 |
| GWP | - | 3922 | 2 | 2 | 4 |
| COP ratio | % (relative to R404A) | 100.0 | 104.4 | 104.4 | 103.0 |
| Refrigerating capacity ratio | % (relative to R404A) | 100.0 | 153.3 | 153.8 | 156.3 |

(continued)

| Item | Unit | Com.Ex.3-1 | Ex.3-13 | Ex.3-14 | Ex.3-15 |
|---|---|---|---|---|---|
| Condensation glide | K | 0.3 | 1.5 | 1.5 | 1.8 |
| Discharge pressure ratio | % (relative to R404A) | 100 | 128 | 128 | 131 |
| Disproportionation reaction(3Mpa) | | - | - | Non-explosion | Non-explosion |

The results in Table 13 indicate that the refrigerant of the present disclosure may be an alternative refrigerant for R404A comprising HFO-1132(E) and propane in an amount of 99.5% or more, comprising HFO-1132(E) in an amount of 7.0 mass% to 75 mass% based on a total amount of HFO-1132(E) and propane, and comprising at least one member selected from the group consisting of HFO-1132a, R143a, R134a, R124, and R152a in an amount of 0.5 mass% or less. This refrigerant has a refrigerating capacity ratio relative to R404A of 100% or more, and a disproportionation reaction does not occur even at 3 Mpa and 150°C of the refrigerant.

The results in Table 13 indicate that the refrigerant of the present disclosure may further comprise at least one member selected from the group consisting of 1,1-difluoroethylene (HFO-1132a) and 2-chloro-1,1,1,2-tetrafluoroethane (HCFC-124).

Compositions obtained by mixing the respective components in proportions shown in Table 10 were evaluated for a content of an acid content (acid component) and the appearance respectively as follows.

In the stability test of the composition, the acid content of the gas was analyzed by the following method. In the cooled tube, the gas remaining in the tube was completely solidified by using liquid nitrogen. After that, the tube was opened and gradually thawed to recover the gas in the Tedlar bag. 5 g of pure water was injected into the Tedlar bag so as to extract the acid into pure water while making contact with the recovered gas well. The extract was detected by ion chromatography to measure the content (mass ppm) of a fluoride ion (F-).

[Table 14]

| No. | Ex./ Com. Ex. | Ex.2-13, 3-14 Composition | | Amount of water added (mass ppm) | Amount of oxygen added (mol%) | Acid content (mass ppm) | Appearance (confirmation of presence/absence of solid matter) |
|---|---|---|---|---|---|---|---|
| | | E-HFO-1132 (mass%) | Propane (mass%) | | | | |
| 1 | Ref. Ex.4-1 | 65.0 | 35.0 | 0(N.D.) | 0 | <1 | absent |
| 2 | Ref. Ex.4-2 | | | 10 | 0 | <1 | absent |
| 3 | Ref. Ex.4-3 | | | 100 | 0 | <1 | absent |
| 4 | Ref. Ex.4-4 | | | 1000 | 0 | <1 | absent |
| 5 | Ref. Ex.4-5 | | | 2000 | 0 | <1 | present |
| 6 | Com.Ex.4-1 | | | 0(N.D.) | 0.01 | 60 | absent |
| 7 | Ex.4-1 | | | 10 | 0.01 | 30 | absent |
| 8 | Ex.4-2 | | | 100 | 0.01 | 20 | absent |
| 9 | Ex.4-3 | | | 1000 | 0.01 | <1 | absent |
| 10 | Com. Ex.4-2 | | | 2000 | 0.01 | <1 | present |
| 11 | Com.Ex.4-3 | | | 0(N.D.) | 0.1 | 150 | absent |
| 12 | Ex.4-4 | | | 10 | 0.1 | 70 | absent |
| 11 | Ex.4-5 | | | 100 | 0.1 | 40 | absent |
| 12 | Ex.4-6 | | | 1000 | 0.1 | 30 | absent |
| 13 | Com.Ex.4-4 | | | 2000 | 0.1 | <1 | present |

As shown in Table 14, it was confirmed that an oxidative decomposition product was generated in the presence of 0.01 mol% or more of oxygen. Besides, it was understood that in the presence of 0.01 mol% or more of oxygen, if an amount of water added is at least 10 mass ppm or more, an amount of the oxidative decomposition product generated is suppressed. It is also understood that in the presence of 0.01 mol% or more of oxygen, if the amount of water added is less than 2000 mass ppm, generation of a solid matter is suppressed.

Mixed refrigerants were prepared by mixing HFO-1132(E), R32, and propane at mass% based on their sum shown in Tables 15 and 16.

[Table 15]

| Item | Unit | Com.Ex.1-1 | Com.Ex.4-1 | Com.Ex.4-2 | Com. Ex.4-3 | Com.Ex.4-4 | Ex.4-1 | Ex.4-2 | Ex.4-3 |
|---|---|---|---|---|---|---|---|---|---|
| | | | C | D | A | B | P | Q | R |
| E-HFO-1132 | mass% | R410A | 60.0 | 75.0 | 55.7 | 0.0 | 73.1 | 10.0 | 10.0 |
| R32 | mass% | | 40.0 | 0.0 | 44.3 | 44.2 | 5.0 | 5.0 | 44.2 |
| Propane | mass% | | 0.0 | 25.0 | 0.0 | 55.8 | 21.9 | 85.0 | 45.8 |
| GWP | - | 2088 | 271 | 2 | 300 | 300 | 35 | 36 | 300 |
| COP ratio | % (relative to R410A) | 100.0 | 100.6 | 98.6 | 100.8 | 96.4 | 98.05 | 103.7 | 94.9 |
| Refrigerating capacity ratio | % (relative to R410A) | 100.0 | 109.5 | 95.9 | 110.1 | 98.5 | 98.9 | 70.1 | 102.7 |

EP 4 538 344 A1

[Table 16]

| Item | Unit | Com.Ex.1-1 | Com.Ex.4-5 | Com.Ex.4-6 | Com.Ex.4-7 | Com.Ex.4-8 | Ex.44 | Ex.4-5 | Ex.4-6 | Ex.4-7 | Com.Ex.4-9 |
|---|---|---|---|---|---|---|---|---|---|---|---|
| E-HFO-1132 | mass% | R410A | 5.0 | 5.0 | 5.0 | 5.0 | 25.0 | 25.0 | 25.0 | 25.0 | 25.0 |
| R32 | mass% | | 5.0 | 15.0 | 25.0 | 35.0 | 5.0 | 15.0 | 25.0 | 35.0 | 50.0 |
| Propane | mass% | | 90.0 | 80.0 | 70.0 | 60.0 | 70.0 | 60.0 | 50.0 | 40.0 | 25.0 |
| GWP | - | 2088 | 37 | 104 | 171 | 238 | 36 | 103 | 171 | 238 | 339 |
| COP ratio | % (relative to R410A) | 100.0 | 103.9 | 102.7 | 101.3 | 98.5 | 102.60 | 100.4 | 97.6 | 95.5 | 96.0 |
| Refrigerating capacity ratio | % (relative to R410A) | 100.0 | 67.1 | 78.0 | 87.3 | 94.7 | 78.3 | 87.8 | 95.6 | 103.0 | 112.8 |

| Item | Unit | Ex.4-8 | Ex.4-9 | Ex.4-10 | Ex.4-11 | Ex.4-12 | Com.Ex.4-9 | Ex.4-9 | Ex.4-13 | Ex.4-14 | Ex.4-15 |
|---|---|---|---|---|---|---|---|---|---|---|---|
| E-HFO-1132 | mass% | 45.0 | 45.0 | 45.0 | 45.0 | 45.0 | 45.0 | 55.0 | 55.0 | 55.0 | 55.0 |
| R32 | mass% | 5.0 | 15.0 | 21.5 | 25.0 | 35.0 | 50.0 | 5.0 | 15.0 | 25.0 | 35.0 |
| Propane | mass% | 50.0 | 40.0 | 33.5 | 30.0 | 20.0 | 5.0 | 40.0 | 30.0 | 20.0 | 10.0 |
| GWP | - | 36 | 103 | 147 | 170 | 237 | 338 | 36 | 103 | 170 | 237 |
| COP ratio | % (relative to R410A) | 99.7 | 97.4 | 96.6 | 96.4 | 96.7 | 99.58 | 98.5 | 97.1 | 96.9 | 98.1 |
| Refrigerating capacity ratio | % (relative to R410A) | 87.8 | 96.3 | 101.5 | 104.1 | 109.8 | 112.4 | 92.2 | 100.5 | 106.8 | 110.3 |

| Item | Unit | Ex.4-16 | Com.Ex.4-10 |
|---|---|---|---|
| E-HFO-1132 | mass% | 70.0 | 70.0 |
| R32 | mass% | 5.0 | 20.0 |
| Propane | mass% | 25.0 | 10.0 |
| GWP | - | 35 | 136 |
| COP ratio | % (relative to R410A) | 98.0 | 98.2 |
| Refrigerating capacity ratio | % (relative to R410A) | 98.0 | 106.1 |
| Disproportionation reaction(3Mpa) | | Non-explosion | Explosion |

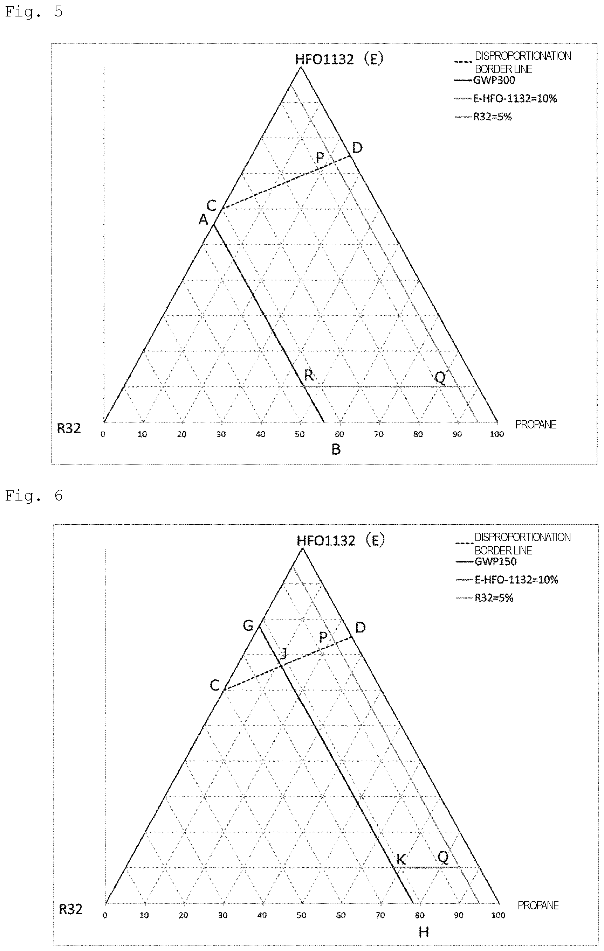

As shown in Tables 15 and 16, and Fig. 5, when the mass% of HFO-1132(E), R32, and propane based on their sum are respectively represented by x, y, and z, if coordinates (x,y,z) in a ternary composition diagram in which the sum of HFO-1132(E), R32, and propane is 100 mass% satisfy the following requirements, a disproportionation reaction does not occur at 3 Mpa and 150°C of the refrigerant, a refrigerating capacity (Cap) ratio relative to R410A is 70% or more, and GWP is 300 or less:
the coordinates (x,y,z) are within the range of a figure surrounded by straight lines CP, PQ, QR, RA, and AC that connect the following 5 points:

　　point C (60.0, 40.0, 0.0),
　　point P (73.1, 5.0, 21.9),
　　point Q (10.0, 5.0, 85.0),
　　point R (10.0, 44.2, 45.8), and
　　point A (55.7, 44.3, 55.8), or

on the straight lines CP, QR, and RA (excluding the points A, C, P, and Q).
Mixed refrigerants were prepared by mixing HFO-1132(E), R32, and propane at mass% based on their sum shown in Tables 17 and 18.

[Table 17]

| Item | Unit | Com. Ex.2-1 | Com.Ex.5-1 | Com.Ex.5-2 | Com.Ex.5-3 | Com.Ex.5-4 | Ex.5-1 | Ex.5-2 | Ex.5-3 | Ex.5-3 |
|---|---|---|---|---|---|---|---|---|---|---|
| | | | C | D | G | H | P | Q | K | J |
| E-HFO-1132 | mass% | R1234yf | 60.0 | 75.0 | 77.9 | 0.0 | 73.1 | 10.0 | 10.0 | 66.7 |
| R32 | mass% | | 40.0 | 0.0 | 22.1 | 21.9 | 5.0 | 5.0 | 21.9 | 22.1 |
| Propane | mass% | | 0.0 | 25.0 | 0.0 | 78.1 | 21.9 | 85.0 | 68.1 | 11.2 |
| GWP | - | 4 | 271 | 2 | 150 | 150 | 35 | 36 | 150 | 150 |
| COP ratio | % (relative to R1234yf) | 100.0 | 100.8 | 99.0 | 100.4 | 101.2 | 98.66 | 102.2 | 101.0 | 98.7 |
| Refrigerating capacity ratio | % (relative to R1234yf) | 100.0 | 311.8 | 283.7 | 302.2 | 234.4 | 293.4 | 197.5 | 253.3 | 314.0 |
| Boiling point | K | -29.5 | -54.3 | -55.6 | -54.2 | -62.1 | -56.5 | -54.8 | -61.1 | -57.5 |

[Table 18]

| Item | Unit | Com.Ex.5-5 | Com.Ex.5-6 | Com.Ex.5-7 | Com.Ex.5-8 | Ex.5-4 | Ex.5-5 | Ex.5-6 | Com.Ex.5-9 | Ex.5-7 | Ex.5-8 |
|---|---|---|---|---|---|---|---|---|---|---|---|
| E-HFO-1132 | mass% | 5.0 | 5.0 | 5.0 | 5.0 | 25.0 | 25.0 | 25.0 | 25.0 | 45.0 | 45.0 |
| R32 | mass% | 5.0 | 15.0 | 20.0 | 25.0 | 5.0 | 15.0 | 20.0 | 25.0 | 5.0 | 15.0 |
| Propane | mass% | 90.0 | 80.0 | 75.0 | 70.0 | 70.0 | 60.0 | 55.0 | 50.0 | 50.0 | 40.0 |
| GWP | - | 37 | 104 | 137 | 171 | 36 | 103 | 137 | 171 | 36 | 103 |
| COP ratio | % (relative to R1234yf) | 102.3 | 101.3 | 101.2 | 101.1 | 101.63 | 100.5 | 99.7 | 98.7 | 99.7 | 98.3 |
| Refrigerating capacity ratio | % (relative to R1234yf) | 188.6 | 221.1 | 237.7 | 254.3 | 224.5 | 256.9 | 271.8 | 285.5 | 257.4 | 287.7 |
| Boiling point | K | -53.8 | -60.3 | -61.3 | -61.8 | -56.3 | -59.3 | -59.9 | -60.1 | -56.7 | -58.5 |

| Item | Unit | Ex.5-9 | Com.Ex.5-9 | Com.Ex.5-10 | Ex.5-10 | Ex.5-11 | Com.Ex.5-11 | Ex.5-12 | Com.Ex.5-12 |
|---|---|---|---|---|---|---|---|---|---|
| E-HFO-1132 | mass% | 45.0 | 45.0 | 60.0 | 60.0 | 60.0 | 60.0 | 70.0 | 70.0 |
| R32 | mass% | 20.0 | 25.0 | 5.0 | 15.0 | 20.0 | 25.0 | 5.0 | 20.0 |
| Propane | mass% | 35.0 | 30.0 | 35.0 | 25.0 | 20.0 | 15.0 | 25.0 | 10.0 |
| GWP | - | 137 | 170 | 35 | 103 | 136 | 170 | 35 | 136 |
| COP ratio | % (relative to R1234yf) | 97.9 | 98.0 | 98.8 | 98.3 | 98.23 | 98.4 | 98.7 | 98.9 |
| Refrigerating capacity ratio | % (relative to R1234yf) | 302.2 | 315.8 | 280.7 | 306.5 | 314.5 | 319.0 | 291.7 | 311.1 |
| Boiling point | K | -58.9 | -59.1 | -56.7 | -58.0 | -58.2 | -58.2 | -56.6 | -57.2 |
| Disproportionation reaction(3Mpa) | | - | - | - | - | - | - | Non-explosion | Explosion |

As shown in Tables 17 and 18, and Fig. 6, when the mass% of HFO-1132(E), R32, and propane based on their sum are respectively represented by x, y, and z, if coordinates (x,y,z) in a ternary composition diagram in which the sum of HFO-1132(E), R32, and propane is 100 mass% satisfy the following requirements, a disproportionation reaction does not occur at 3 Mpa and 150°C of the refrigerant, a refrigerating capacity (Cap) ratio relative to R1234yf is 197.5% or more, and GWP is 150 or less:
the coordinates (x,y,z) are within the range of a figure surrounded by straight lines PQ, QK, KJ, and JP that connect the following 4 points:

point P (73.1, 5.0, 21.9),
point Q (10.0, 5.0, 85.0),
point K (10.0, 21.9, 68.1), and
point J (66.7, 22.1, 11.2), or

on the straight lines JP, QK, and KJ.

Mixed refrigerants were prepared by mixing HFO-1132(E), R32, and propane at mass% based on their sum shown in Tables 19 and 20.

[Table 19]

| Item | Unit | Com.Ex.3-1 | Com.Ex.6-1 | Com.Ex.6-2 | Com.Ex.6-3 | Com.Ex.64 | Ex.6-1 | Ex.6-2 | Ex.6-3 | Ex.6-3 |
|---|---|---|---|---|---|---|---|---|---|---|
| | | | C | D | G | H | P | Q | K | J |
| E-HFO-1132 | mass% | R404A | 60.0 | 75.0 | 77.9 | 0.0 | 73.1 | 10.0 | 10.0 | 66.7 |
| R32 | mass% | | 40.0 | 0.0 | 22.1 | 21.9 | 5.0 | 5.0 | 21.9 | 22.1 |
| Propane | mass% | | 0.0 | 25.0 | 0.0 | 78.1 | 21.9 | 85.0 | 68.1 | 11.2 |
| GWP | - | 3922 | 271 | 2 | 150 | 150 | 35 | 36 | 150 | 150 |
| COP ratio | % (relative to R404A) | 100.0 | 107.9 | 104.0 | 107.0 | 107.7 | 103.51 | 110.7 | 106.6 | 103.9 |
| Refrigerating capacity ratio | % (relative to R404A) | 100.0 | 177.0 | 159.2 | 170.5 | 126.8 | 164.3 | 110.3 | 137.5 | 176.1 |

[Table 20]

| Item | Unit | Com.Ex.6-5 | Com.Ex.6-6 | Com.Ex.6-7 | Com.Ex.6-8 | Ex.6-4 | Ex.6-5 | Ex.6-6 | Com.Ex.6-9 | Ex.6-7 | Ex.6-8 |
|---|---|---|---|---|---|---|---|---|---|---|---|
| E-HFO-1132 | mass% | 5.0 | 5.0 | 5.0 | 5.0 | 25.0 | 25.0 | 25.0 | 25.0 | 25.0 | 45.0 |
| R32 | mass% | 5.0 | 15.0 | 20.0 | 25.0 | 5.0 | 15.0 | 20.0 | 25.0 | 15.0 | 5.0 |
| Propane | mass% | 90.0 | 80.0 | 75.0 | 70.0 | 70.0 | 60.0 | 55.0 | 50.0 | 60.0 | 50.0 |
| GWP | - | 37 | 104 | 137 | 171 | 36 | 103 | 137 | 171 | 103 | 36 |
| COP ratio | % (relative to R404A) | 111.4 | 108.7 | 107.6 | 106.5 | 108.67 | 106.2 | 105.1 | 104.0 | 106.2 | 105.6 |
| Refrigerating capacity ratio | % (relative to R404A) | 105.9 | 120.9 | 128.9 | 137.4 | 124.3 | 141.6 | 150.5 | 159.4 | 141.6 | 143.9 |

| Item | Unit | Ex.6-9 | Com.Ex.6-9 | Com.Ex.6-10 | Ex.6-10 | Ex.6-11 | Com.Ex.6-11 | Ex.6-12 | Com.Ex.6-12 |
|---|---|---|---|---|---|---|---|---|---|
| E-HFO-1132 | mass% | 45.0 | 45.0 | 45.0 | 60.0 | 60.0 | 60.0 | 60.0 | 70.0 |
| R32 | mass% | 15.0 | 20.0 | 25.0 | 5.0 | 15.0 | 20.0 | 25.0 | 5.0 |
| Propane | mass% | 40.0 | 35.0 | 30.0 | 35.0 | 25.0 | 20.0 | 15.0 | 25.0 |
| GWP | - | 103 | 137 | 170 | 35 | 103 | 136 | 170 | 35 |
| COP ratio | % (relative to R404A) | 103.3 | 102.6 | 102.5 | 103.8 | 102.89 | 102.9 | 103.3 | 103.5 |
| Refrigerating capacity ratio | % (relative to R404A) | 161.1 | 169.7 | 177.7 | 157.5 | 172.0 | 176.5 | 179.0 | 163.6 |
| Disproportionation reaction(3Mpa) | - | - | - | - | - | - | - | Non-explosion | Explosion |

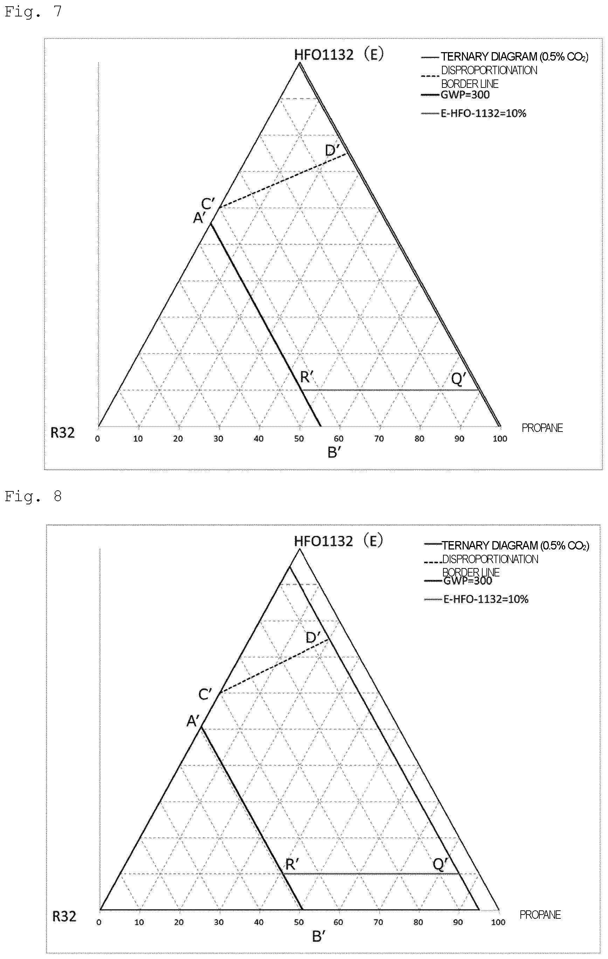

As shown in Tables 19 and 20, and Fig. 7, when the mass% of HFO-1132(E), R32, and propane based on their sum are respectively represented by x, y, and z, if coordinates (x,y,z) in a ternary composition diagram in which the sum of HFO-1132(E), R32, and propane is 100 mass% satisfy the following requirements, a disproportionation reaction does not occur at 3 Mpa and 150°C of the refrigerant, a refrigerating capacity (Cap) ratio relative to R404A is 110% or more, and GWP is 150 or less:
the coordinates (x,y,z) are within the range of a figure surrounded by straight lines PQ, QK, KJ, and JP that connect the following 4 points:

> point P (73.1, 5.0, 21.9),
> point Q (10.0, 5.0, 85.0),
> point K (10.0, 21.9, 68.1), and
> point J (66.7, 22.1, 11.2), or

on the straight lines JP, QK, and KJ.

Mixed refrigerants were prepared by mixing HFO-1132(E), R32, propane, and $CO_2$ at mass% based on their sum shown in Tables 21, 22 and 23.

[Table 21]

| Item | Unit | Com.Ex.1-1 | Com.Ex.7-1 | Ex.7-1 | Com.Ex.7-2 | Com.Ex.7-3 | Ex.7-2 | Ex.7-3 |
|---|---|---|---|---|---|---|---|---|
| | | | C' | D' | A' | B' | Q' | R |
| E-HFO-1132 | mass% | R410A | 60.0 | 75.0 | 55.2 | 0.0 | 10.0 | 10.0 |
| R32 | mass% | | 39.5 | 0.0 | 44.3 | 44.2 | 0.0 | 44.2 |
| Propane | mass% | | 0.0 | 24.5 | 0.0 | 55.3 | 89.5 | 45.3 |
| $CO_2$ | mass% | | 0.5 | 0.5 | 0.5 | 0.5 | 0.5 | 0.5 |
| GWP | - | 2088 | 267 | 1 | 300 | 300 | 3 | 300 |
| COP ratio | % (relative to R410A) | 100.0 | 100.5 | 98.5 | 100.7 | 96.2 | 104.69 | 94.7 |
| Refrigerating capacity ratio | % (relative to R410A) | 100.0 | 110.1 | 96.6 | 110.8 | 99.1 | 65.2 | 103.4 |

| Item | Unit | Com.Ex.7-4 | Com.Ex.7-5 | Com.Ex.7-6 | Com.Ex.7-7 | Ex.7-4 | Ex.7-5 | Ex.7-6 | Ex.7-7 | Com.Ex.7-8 | Ex.7-8 |
|---|---|---|---|---|---|---|---|---|---|---|---|
| E-HFO-1132 | mass% | 5.0 | 5.0 | 5.0 | 5.0 | 25.0 | 25.0 | 25.0 | 25.0 | 25.0 | 45.0 |
| R32 | mass% | 0.0 | 15.0 | 25.0 | 40.0 | 0.0 | 15.0 | 25.0 | 40.0 | 50.0 | 0.0 |
| Propane | mass% | 94.5 | 79.5 | 69.5 | 54.5 | 74.5 | 59.5 | 49.5 | 34.5 | 24.5 | 54.5 |
| $CO_2$ | mass% | 0.5 | 0.5 | 0.5 | 0.5 | 0.5 | 0.5 | 0.5 | 0.5 | 0.5 | 0.5 |
| GWP | - | 3 | 104 | 171 | 272 | 2 | 103 | 170 | 271 | 338 | 2 |
| COP ratio | % (relative to R410A) | 105.1 | 102.6 | 101.2 | 96.6 | 103.50 | 100.2 | 97.4 | 95.3 | 95.9 | 100.8 |
| Refrigerating capacity ratio | % (relative to R410A) | 62.2 | 78.8 | 88.0 | 98.5 | 73.8 | 88.5 | 96.3 | 107.6 | 113.5 | 83.8 |

| Item | Unit | Ex.7-10 | Ex.7-11 | Com.Ex.7-9 | Ex.7-12 | Ex.7-13 | Ex.7-14 | Ex.7-15 | Ex.7-16 | Ex.7-17 | Com.Ex.7-10 |
|---|---|---|---|---|---|---|---|---|---|---|---|
| E-HFO-1132 | mass% | 45.0 | 45.0 | 45.0 | 55.0 | 55.0 | 55.0 | 55.0 | 70.0 | 70.0 | 70.0 |
| R32 | mass% | 25.0 | 40.0 | 50.0 | 0.0 | 15.0 | 25.0 | 40.0 | 0.0 | 5.0 | 20.0 |
| Propane | mass% | 29.5 | 14.5 | 4.5 | 44.5 | 29.5 | 19.5 | 4.5 | 29.5 | 24.5 | 9.5 |
| $CO_2$ | mass% | 0.5 | 0.5 | 0.5 | 0.5 | 0.5 | 0.5 | 0.5 | 0.5 | 0.5 | 0.5 |
| GWP | - | 170 | 271 | 338 | 2 | 103 | 170 | 271 | 2 | 35 | 136 |
| COP ratio | % (relative to R410A) | 96.33 | 97.2 | 99.6 | 99.47 | 97.0 | 96.9 | 99.3 | 98.5 | 97.9 | 98.2 |
| Refrigerating capacity ratio | % (relative to R410A) | 104.9 | 112.2 | 113.0 | 88.4 | 101.2 | 107.6 | 111.4 | 94.9 | 98.8 | 106.8 |
| Disproportionation reaction(3Mpa) | | - | - | - | - | - | - | - | - | Non-explosion | Explosion |

[Table 22]

| Item | Unit | Com.Ex.1-1 | Com.Ex.7-11 C' | Ex.7-18 D' | Com.Ex.7-12 A' | Com.Ex.7-13 B' | Ex.7-19 Q' | Ex.7-20 R |
|---|---|---|---|---|---|---|---|---|
| E-HFO-1132 | mass% | | 60.0 | 75.0 | 50.7 | 0.0 | 10.0 | 10.0 |
| R32 | mass% | R410A | 35.0 | 0.0 | 44.3 | 44.2 | 0.0 | 44.2 |
| Propane | mass% | | 0.0 | 20.0 | 0.0 | 50.8 | 85.0 | 40.8 |
| $CO_2$ | mass% | | 5.0 | 5.0 | 5.0 | 5.0 | 5.0 | 5.0 |
| GWP | - | 2088 | 237 | 1 | 300 | 300 | 3 | 300 |
| COP ratio | % (relative to R410A) | 100.0 | 99.3 | 97.4 | 99.6 | 94.1 | 102.74 | 93.3 |
| Refrigerating capacity ratio | % (relative to R410A) | 100.0 | 116.1 | 103.9 | 117.6 | 105.1 | 72.7 | 110.1 |

| Item | Unit | Com.Ex.7-14 | Com.Ex.7-15 | Com.Ex.7-16 | Com.Ex.7-17 | Com.Ex.7-18 | Ex.7-21 | Ex.7-22 | Ex.7-23 | Ex.7-24 | Com.Ex.7-19 |
|---|---|---|---|---|---|---|---|---|---|---|---|
| E-HFO-1132 | mass% | 5.0 | 5.0 | 5.0 | 5.0 | 5.0 | 25.0 | 25.0 | 25.0 | 25.0 | 25.0 |
| R32 | mass% | 0.0 | 15.0 | 25.0 | 40.0 | 50.0 | 0.0 | 15.0 | 25.0 | 40.0 | 50.0 |
| Propane | mass% | 90.0 | 75.0 | 65.0 | 50.0 | 40.0 | 70.0 | 55.0 | 45.0 | 30.0 | 20.0 |
| $CO_2$ | mass% | 5.0 | 5.0 | 5.0 | 5.0 | 5.0 | 5.0 | 5.0 | 5.0 | 5.0 | 5.0 |
| GWP | - | 3 | 104 | 171 | 272 | 339 | 2 | 103 | 170 | 271 | 338 |
| COP ratio | % (relative to R410A) | 102.9 | 101.5 | 99.6 | 94.3 | 92.85 | 101.8 | 98.4 | 95.6 | 94.0 | 95.2 |
| Refrigerating capacity ratio | % (relative to R410A) | 69.6 | 85.9 | 94.6 | 104.5 | 111.8 | 81.2 | 95.3 | 103.0 | 114.4 | 119.7 |

| Item | Unit | Ex.7-25 | Ex.7-26 | Ex.7-27 | Ex.7-28 | Ex.7-29 | Ex.7-30 | Ex.7-31 | Ex.7-32 | Ex.7-33 | Com. Ex.7-20 |
|---|---|---|---|---|---|---|---|---|---|---|---|
| E-HFO-1132 | mass% | 45.0 | 45.0 | 45.0 | 45.0 | 55.0 | 55.0 | 55.0 | 70.0 | 70.0 | 70.0 |
| R32 | mass% | 0.0 | 15.0 | 25.0 | 40.0 | 0.0 | 15.0 | 25.0 | 0.0 | 5.0 | 20.0 |
| Propane | mass% | 50.0 | 35.0 | 25.0 | 10.0 | 40.0 | 25.0 | 15.0 | 25.0 | 20.0 | 5.0 |
| $CO_2$ | mass% | 5.0 | 5.0 | 5.0 | 5.0 | 5.0 | 5.0 | 5.0 | 5.0 | 5.0 | 5.0 |
| GWP | - | 2 | 103 | 170 | 271 | 2 | 103 | 170 | 2 | 35 | 136 |
| COP ratio | % (relative to R410A) | 99.0 | 95.87 | 95.4 | 96.9 | 97.86 | 96.0 | 97.2 | 97.3 | 96.9 | 97.9 |
| Refrigerating capacity ratio | % (relative to R410A) | 91.0 | 104.2 | 111.8 | 118.3 | 95.8 | 108.3 | 115.2 | 102.3 | 105.9 | 113.2 |
| Disproportionation reaction(3Mpa) | | - | - | - | - | - | - | - | Non-explosion | Non-explosion | Explosion |

[Table 23]

| Item | Unit | Com.Ex.1-1 | Com.Ex.7-21 | Ex.7-34 | Com.Ex.7-22 | Com.Ex.7-23 | Ex.7-35 | Ex.7-36 |
|---|---|---|---|---|---|---|---|---|
| | | | C' | D' | A' | B' | Q' | R |
| E-HFO-1132 | mass% | R410A | 60.0 | 75.0 | 45.7 | 0.0 | 10.0 | 10.0 |
| R32 | mass% | | 30.0 | 0.0 | 44.3 | 44.2 | 0.0 | 44.2 |
| Propane | mass% | | 0.0 | 15.0 | 0.0 | 45.8 | 80.0 | 35.8 |
| $CO_2$ | mass% | | 10.0 | 10.0 | 10.0 | 10.0 | 10.0 | 10.0 |
| GWP | - | 2088 | 203 | 1 | 300 | 300 | 3 | 300 |
| COP ratio | % (relative to R410A) | 100.0 | 97.9 | 96.3 | 98.2 | 91.8 | 101.16 | 90.3 |
| Refrigerating capacity ratio | % (relative to R410A) | 100.0 | 123.0 | 112.7 | 125.5 | 112.3 | 81.7 | 117.6 |

| Item | Unit | Com.Ex.7-24 | Com.Ex.7-25 | Com.Ex.7-26 | Com.Ex.7-27 | Com.Ex.7-28 | Ex.7-37 | Ex.7-38 | Ex.7-39 | Ex.7-40 | Com.Ex.7-29 |
|---|---|---|---|---|---|---|---|---|---|---|---|
| E-HFO-1132 | mass% | 5.0 | 5.0 | 5.0 | 5.0 | 5.0 | 25.0 | 25.0 | 25.0 | 25.0 | 25.0 |
| R32 | mass% | 0.0 | 15.0 | 25.0 | 40.0 | 50.0 | 0.0 | 15.0 | 25.0 | 40.0 | 50.0 |
| Propane | mass% | 85.0 | 70.0 | 60.0 | 45.0 | 35.0 | 65.0 | 50.0 | 40.0 | 25.0 | 15.0 |
| $CO_2$ | mass% | 10.0 | 10.0 | 10.0 | 10.0 | 10.0 | 10.0 | 10.0 | 10.0 | 10.0 | 10.0 |
| GWP | - | 3 | 104 | 171 | 272 | 339 | 2 | 103 | 170 | 271 | 338 |
| COP ratio | % (relative to R410A) | 101.3 | 100.0 | 97.4 | 92.3 | 91.76 | 99.9 | 96.1 | 93.6 | 93.4 | 94.4 |
| Refrigerating capacity ratio | % (relative to R410A) | 78.6 | 94.2 | 102.1 | 112.0 | 120.2 | 90.0 | 103.3 | 111.1 | 122.9 | 127.2 |

| Item | Unit | Ex.7-41 | Ex.7-42 | Ex.7-43 | Ex.7-44 | Ex.7-45 | Ex.7-46 | Ex.7-47 | Ex.7-48 | Ex.7-49 | Com.Ex.7-30 |
|---|---|---|---|---|---|---|---|---|---|---|---|
| E-HFO-1132 | mass% | 45.0 | 45.0 | 45.0 | 45.0 | 55.0 | 55.0 | 55.0 | 70.0 | 70.0 | 70.0 |
| R32 | mass% | 0.0 | 15.0 | 25.0 | 40.0 | 0.0 | 15.0 | 25.0 | 0.0 | 5.0 | 15.0 |
| Propane | mass% | 45.0 | 30.0 | 20.0 | 5.0 | 35.0 | 20.0 | 10.0 | 20.0 | 15.0 | 5.0 |
| $CO_2$ | mass% | 10.0 | 10.0 | 10.0 | 10.0 | 10.0 | 10.0 | 10.0 | 10.0 | 10.0 | 10.0 |
| GWP | - | 2 | 103 | 170 | 271 | 2 | 103 | 170 | 1 | 35 | 102 |
| COP ratio | % (relative to R410A) | 96.9 | 94.37 | 94.3 | 96.7 | 96.05 | 94.8 | 95.6 | 96.0 | 95.8 | 96.7 |
| Refrigerating capacity ratio | % (relative to R410A) | 99.8 | 112.9 | 120.1 | 125.7 | 104.7 | 116.8 | 122.0 | 111.2 | 114.5 | 119.5 |
| Disproportionation reaction(3Mpa) | | - | - | - | - | - | - | - | Non-explosion | Non-explosion | Explosion |

Besides, assuming that a content of $CO_2$ was a mass%, respective points of x = E-HFO-1132, y = R32, and z = propane in a ternary diagram were obtained by the least squares method as shown in Table 24.

[Table 24]

| Point C' | | | | |
|---|---|---|---|---|
| a=$CO_2$ | 0.0 | 0.5 | 5.0 | 10.0 |
| x=E-HFO-1132 | 60.0 | 60.0 | 60.0 | 60.0 |
| y=R32 | 40.0 | 39.5 | 35.0 | 30.0 |
| z=Propane | 0.0 | 0.0 | 0.0 | 0.0 |
| Approximation for x with a | 60.0 | | | |
| Approximation for y with a | -a+40.0 | | | |
| Approximation for z with a | 0.0 | | | |

| Point D' | | | | |
|---|---|---|---|---|
| a=$CO_2$ | 0.0 | 0.5 | 5.0 | 10.0 |
| x=E-HFO-1132 | 75.0 | 75.0 | 75.0 | 75.0 |
| y=R32 | 0.0 | 0.0 | 0.0 | 0.0 |
| Propane | 25.0 | 24.5 | 20.0 | 15.0 |
| Approximation for x with a | 75.0 | | | |
| Approximation for y with a | 0.0 | | | |
| Approximation for z with a | -a+25.0 | | | |

| Point Q' | | | | |
|---|---|---|---|---|
| a=$CO_2$ | 0.0 | 0.5 | 5.0 | 10.0 |
| x=E-HFO-1132 | 10.0 | 10.0 | 10.0 | 10.0 |
| y=R32 | 0.0 | 0.0 | 0.0 | 0.0 |
| z=Propane | 90.0 | 89.5 | 85.0 | 80.0 |
| Approximation for x with a | 10.0 | | | |
| Approximation for y with a | 0.0 | | | |
| Approximation for z with a | -a+90.0 | | | |

| Point R' | | | | |
|---|---|---|---|---|
| a=$CO_2$ | 0.0 | 0.5 | 5.0 | 10.0 |
| x=E-HFO-1132 | 10.0 | 10.0 | 10.0 | 10.0 |
| y=R32 | 44.2 | 44.2 | 44.2 | 44.2 |
| Propane | 45.8 | 45.3 | 40.8 | 35.8 |
| Approximation for x with a | 10.0 | | | |
| Approximation for y with a | 44.2 | | | |
| Approximation for z with a | -a+45.8 | | | |

| Point A' | | | | |
|---|---|---|---|---|
| a=CO$_2$ | 0.0 | 0.5 | 5.0 | 10.0 |
| x=E-HFO-1132 | 55.7 | 55.2 | 50.7 | 45.7 |
| y=R32 | 44.3 | 44.3 | 44.3 | 44.3 |
| z=Propane | 0.0 | 0.0 | 0.0 | 0.0 |
| Approximation for x with a | -a+55.7 | | | |
| Approximation for y with a | 44.3 | | | |
| Approximation for z with a | 0.0 | | | |

Based on Tables 21 to 23, and Figs. 7 to 9, when the refrigerant comprises trans-1,2-difluoroethylene (HFO-1132(E)), difluoroethylene (R32), propane, and carbon dioxide (CO$_2$), and a total content of HFO-1132(E), R32, propane, and CO$_2$ is 99.5 mass% or more based on a total amount of the refrigerant, the content of CO$_2$ is a mass%, and the mass% of HFO-1132(E), R32, and propane based on their sum are respectively represented by x, y, and z, if coordinates (x,y,z) in a ternary composition diagram in which the sum of HFO-1132(E), R32, and propane is (100-a) mass% satisfy the following requirements, a disproportionation reaction does not occur at 3 Mpa and 150°C, a refrigerating capacity (Cap) ratio relative to R410A is 65.0% or more, and GWP is 300 or less:

the coordinates (x,y,z) are, when 0.0 < a ≤ 10.0, within the range of a figure surrounded by straight lines C'D', D'Q', Q'R', R'A', and A'C' that connect the following 5 points:

point C' (60.0, -a+40.0, 0.0),
point D' (75.0, 0.0, -a+25.0),
point Q' (10.0, 0.0, -a+90.0),
point R' (10.0, 44.2, -a+45.8), and
point A' (-a+55.7, 44.3, 0.0), or

on the straight lines C'D', Q'R', and R'A' (excluding the points A', C', D', and Q').

Mixed refrigerants were prepared by mixing HFO-1132(E), R32, propane, and CO$_2$ at mass% based on their sum shown in Tables 25, 26 and 27.

[Table 25]

| Item | Unit | Com.Ex.2-1 | Com.Ex.8-1 | Ex.8-1 | Com.Ex.8-2 | Com.Ex.8-3 | Ex.8-2 | Ex.8-3 | Ex.8-4 |
|---|---|---|---|---|---|---|---|---|---|
| | | | C' | D' | G' | H' | Q' | K' | J' |
| E-HFO-1132 | mass% | R1234yf | 60.0 | 75.0 | 77.4 | 0.0 | 10.0 | 10.0 | 66.7 |
| R32 | mass% | | 39.5 | 0.0 | 22.1 | 21.9 | 0.0 | 21.9 | 22.1 |
| Propane | mass% | | 0.0 | 24.5 | 0.0 | 77.6 | 89.5 | 67.6 | 10.7 |
| $CO_2$ | mass% | | 0.5 | 0.5 | 0.5 | 0.5 | 0.5 | 0.5 | 0.5 |
| GWP | - | 4 | 267 | 1 | 150 | 150 | 3 | 150 | 150 |
| COP ratio | % (relative to R1234yf) | 100.0 | 100.7 | 99.4 | 100.3 | 101.1 | 104.26 | 101.0 | 98.7 |
| Refrigerating capacity ratio | % (relative to R1234yf) | 100.0 | 314.0 | 287.6 | 304.5 | 236.8 | 185.4 | 255.7 | 315.9 |

| Item | Unit | Com.Ex.8-4 | Com.Ex.8-5 | Com.Ex.8-6 | Ex.8-5 | Ex.8-6 | Com.Ex.8-7 | Ex.8-7 | Ex.8-8 | Com.Ex.8-8 | Ex.8-9 |
|---|---|---|---|---|---|---|---|---|---|---|---|
| E-HFO-1132 | mass% | 5.0 | 5.0 | 5.0 | 25.0 | 25.0 | 25.0 | 45.0 | 45.0 | 45.0 | 55.0 |
| R32 | mass% | 0.0 | 15.0 | 25.0 | 0.0 | 15.0 | 25.0 | 0.0 | 15.0 | 25.0 | 0.0 |
| Propane | mass% | 94.5 | 79.5 | 69.5 | 74.5 | 59.5 | 49.5 | 54.5 | 39.5 | 29.5 | 44.5 |
| $CO_2$ | mass% | 0.5 | 0.5 | 0.5 | 0.5 | 0.5 | 0.5 | 0.5 | 0.5 | 0.5 | 0.5 |
| GWP | - | 3 | 104 | 171 | 2 | 103 | 170 | 2 | 103 | 170 | 2 |
| COP ratio | % (relative to R1234yf) | 103.4 | 101.3 | 101.0 | 102.2 | 100.34 | 98.6 | 100.5 | 98.2 | 97.9 | 99.5 |
| Refrigerating capacity ratio | % (relative to R1234yf) | 174.9 | 223.4 | 256.7 | 210.1 | 259.3 | 287.9 | 243.9 | 290.2 | 318.3 | 259.8 |

| Item | Unit | Ex.8-10 | Com.Ex.8-9 | Ex.8-11 | Ex.8-12 | Com.Ex.8-10 |
|---|---|---|---|---|---|---|
| E-HFO-1132 | mass% | 55.0 | 55.0 | 70.0 | 70.0 | 70.0 |
| R32 | mass% | 15.0 | 25.0 | 0.0 | 5.0 | 20.0 |
| Propane | mass% | 29.5 | 19.5 | 29.5 | 24.5 | 9.5 |
| $CO_2$ | mass% | 0.5 | 0.5 | 0.5 | 0.5 | 0.5 |
| GWP | - | 103 | 170 | 2 | 35 | 136 |
| COP ratio | % (relative to R410A) | 98.2 | 98.09 | 99.0 | 98.6 | 98.8 |
| Refrigerating capacity ratio | % (relative to R410A) | 304.8 | 322.5 | 281.6 | 294.1 | 313.0 |
| Disproportionation reaction(3Mpa) | | - | - | Non-explosion | Non-explosion | Explosion |

[Table 26]

| Item | Unit | Com.Ex.2-1 | Com.Ex.8-11 | Ex.8-13 | Com.Ex.8-12 | Com.Ex.8-13 | Ex.8-14 | Ex.8-15 | Ex.8-16 |
|---|---|---|---|---|---|---|---|---|---|
| | | | C' | D' | G' | H' | Q' | K' | J' |
| E-HFO-1132 | mass% | R1234yf | 60.0 | 75.0 | 72.9 | 0.0 | 10.0 | 10.0 | 66.6 |
| R32 | mass% | | 35.0 | 0.0 | 22.1 | 21.9 | 0.0 | 21.9 | 22.1 |
| Propane | mass% | | 0.0 | 20.0 | 0.0 | 73.1 | 85.0 | 63.1 | 6.3 |
| $CO_2$ | mass% | | 5.0 | 5.0 | 5.0 | 5.0 | 5.0 | 5.0 | 5.0 |
| GWP | - | 4 | 237 | 1 | 150 | 150 | 3 | 150 | 150 |
| COP ratio | % (relative to R1234yf) | 100.0 | 99.5 | 98.0 | 99.4 | 100.7 | 101.46 | 100.0 | 98.3 |
| Refrigerating capacity ratio | % (relative to R1234yf) | 100.0 | 334.1 | 308.6 | 326.6 | 259.6 | 204.2 | 278.4 | 334.1 |
| Boiling point | °C | -29.5 | -54.9 | -56.1 | -54.8 | -62.4 | -49.4 | -61.5 | -57.9 |

| Item | Unit | Com.Ex.8-14 | Com.Ex.8-15 | Com.Ex.8-16 | Ex.8-17 | Ex.8-18 | Com.Ex.8-17 | Ex.8-19 | Ex.8-20 | Com.Ex.8-18 | Ex.8-21 |
|---|---|---|---|---|---|---|---|---|---|---|---|
| E-HFO-1132 | mass% | 5.0 | 5.0 | 5.0 | 25.0 | 25.0 | 25.0 | 45.0 | 45.0 | 45.0 | 55.0 |
| R32 | mass% | 0.0 | 15.0 | 25.0 | 0.0 | 15.0 | 25.0 | 0.0 | 15.0 | 25.0 | 0.0 |
| Propane | mass% | 90.0 | 75.0 | 65.0 | 70.0 | 55.0 | 45.0 | 50.0 | 35.0 | 25.0 | 40.0 |
| $CO_2$ | mass% | 5.0 | 5.0 | 5.0 | 5.0 | 5.0 | 5.0 | 5.0 | 5.0 | 5.0 | 5.0 |
| GWP | - | 3 | 104 | 171 | 2 | 103 | 170 | 2 | 103 | 170 | 2 |
| COP ratio | % (relative to R1234yf) | 101.6 | 100.7 | 100.2 | 101.0 | 99.12 | 97.2 | 99.1 | 97.2 | 97.2 | 98.3 |
| Refrigerating capacity ratio | % (relative to R1234yf) | 194.9 | 245.8 | 279.4 | 232.2 | 281.9 | 310.2 | 266.9 | 314.7 | 341.5 | 283.7 |
| Boiling point | °C | -47.1 | -60.8 | -62.1 | -53.4 | -59.8 | -60.4 | -55.3 | -58.9 | -59.4 | -55.8 |

| Item | Unit | Ex.8-22 | Com.Ex.8-19 | Ex.8-23 | Ex.8-24 | Com.Ex.8-20 |
|---|---|---|---|---|---|---|
| E-HFO-1132 | mass% | 55.0 | 55.0 | 70.0 | 70.0 | 70.0 |
| R32 | mass% | 15.0 | 25.0 | 0.0 | 5.0 | 20.0 |
| Propane | mass% | 25.0 | 15.0 | 25.0 | 20.0 | 5.0 |
| $CO_2$ | mass% | 5.0 | 5.0 | 5.0 | 5.0 | 5.0 |
| GWP | - | 103 | 170 | 2 | 35 | 136 |
| COP ratio | % (relative to R1234yf) | 97.4 | 97.46 | 98.0 | 97.7 | 98.5 |
| Refrigerating capacity ratio | % (relative to R1234yf) | 328.2 | 342.2 | 305.2 | 316.4 | 331.0 |
| Boiling point | °C | -58.6 | -58.9 | -56.1 | -57.1 | -57.5 |
| Disproportionation reaction(3Mpa) | | - | - | Non-explosion | Non-explosion | Explosion |

[Table 27]

| Item | Unit | Com.Ex.2-1 | Com.Ex.8-19 | Ex.8-22 | Com.Ex.8-20 | Com.Ex.8-21 | Ex.8-23 | Ex.8-24 | Ex.8-25 |
|---|---|---|---|---|---|---|---|---|---|
| | | | C' | D' | G' | H' | Q' | K' | J' |
| E-HFO-1132 | mass% | R1234yf | 60.0 | 75.0 | 67.9 | 0.0 | 10.0 | 10.0 | 64.0 |
| R32 | mass% | | 30.0 | 0.0 | 22.1 | 21.9 | 0.0 | 21.9 | 22.1 |
| Propane | mass% | | 0.0 | 15.0 | 0,0 | 68.1 | 80.0 | 58.1 | 3.9 |
| $CO_2$ | mass% | | 10.0 | 10.0 | 10.0 | 10.0 | 10.0 | 10.0 | 10.0 |
| GWP | - | 4 | 203 | 1 | 150 | 150 | 3 | 150 | 150 |
| COP ratio | % (relative to R410A) | 100.0 | 98.4 | 96.9 | 98.3 | 99.9 | 100.19 | 98.7 | 97.6 |
| Refrigerating capacity ratio | % (relative to R410A) | 100.0 | 358.0 | 335.8 | 353.1 | 286.7 | 229.8 | 304.9 | 358.1 |
| Boiling point | °C | -29.5 | -54.9 | -56.1 | -54.8 | -62.4 | -49.4 | -61.5 | -57.9 |

EP 4 538 344 A1

58

| item | Unit | Com.Ex.8-22 | Com.Ex.8-23 | Com.Ex.8-24 | Ex.8-26 | Ex.8-27 | Com.Ex.8-25 | Ex.8-28 | Ex.8-29 | Com.Ex.8-26 | Ex.8-30 |
|---|---|---|---|---|---|---|---|---|---|---|---|
| E-HFO-1132 | mass% | 5.0 | 5.0 | 5.0 | 25.0 | 25.0 | 25.0 | 45.0 | 45.0 | 45.0 | 55.0 |
| R32 | mass% | 0.0 | 15.0 | 25.0 | 0.0 | 15.0 | 25.0 | 0.0 | 15.0 | 25.0 | 0.0 |
| Propane | mass% | 85.0 | 70.0 | 60.0 | 65.0 | 50.0 | 40.0 | 45.0 | 30.0 | 20.0 | 35.0 |
| $CO_2$ | mass% | 10.0 | 10.0 | 10.0 | 10.0 | 10.0 | 10.0 | 10.0 | 10.0 | 10.0 | 10.0 |
| GWP | - | 3 | 104 | 171 | 2 | 103 | 170 | 2 | 103 | 170 | 2 |
| COP ratio | % (relative to R1234yf) | 100.2 | 99.9 | 98.9 | 99.6 | 97.51 | 95.6 | 97.5 | 96.2 | 96.2 | 96.9 |
| Refrigerating capacity ratio | % (relative to R1234yf) | 219.7 | 273.0 | 305.7 | 259.2 | 308.9 | 338.1 | 295.3 | 345.0 | 367.9 | 313.6 |
| Boiling point | °C | -47.1 | -60.8 | -62.1 | -53.4 | -59.8 | -60.4 | -55.3 | -58.9 | -59.4 | -55.8 |

| item | Unit | Ex.8-31 | Com.Ex.8-27 | Ex.8-32 | Ex.8-33 | Com.Ex.8-28 |
|---|---|---|---|---|---|---|
| E-HFO-1132 | mass% | 55.0 | 55.0 | 70.0 | 70.0 | 70.0 |
| R32 | mass% | 15.0 | 25.0 | 0.0 | 5.0 | 15.0 |
| Propane | mass% | 20.0 | 10.0 | 20.0 | 15.0 | 5.0 |
| $CO_2$ | mass% | 10.0 | 10.0 | 10.0 | 10.0 | 10.0 |
| GWP | - | 103 | 170 | 1 | 35 | 102 |
| COP ratio | % (relative to R1234yf) | 96.4 | 96.80 | 96.9 | 96.7 | 97.4 |
| Refrigerating capacity ratio | % (relative to R1234yf) | 355.6 | 365.6 | 333.5 | 343.2 | 352.6 |
| Boiling point | °C | -58.6 | -58.9 | -56.1 | -57.1 | -57.5 |
| Disproportionation reaction(3Mpa) | | - | - | Non-explosion | Non-explosion | Explosion |

Besides, assuming that the content of $CO_2$ was a mass%, respective points of x = E-HFO-1132, y = R32, and z = propane in a ternary diagram were obtained by the least squares method as shown in Table 28.

[Table 28]

| Point K' | | | | |
|---|---|---|---|---|
| a=$CO_2$ | 0.0 | 0.5 | 5.0 | 10.0 |
| x=E-HFO-1132 | 10.0 | 10.0 | 10.0 | 10.0 |
| y=R32 | 21.9 | 21.9 | 21.9 | 21.9 |
| z=Propane | 68.1 | 67.6 | 63.1 | 58.1 |
| Approximation for x with a | 10.0 | | | |
| Approximation for y with a | 21.9 | | | |
| Approximation for z with a | -a+68.1 | | | |

| Point J' | | | | | |
|---|---|---|---|---|---|
| a=$CO_2$ | 0.0 | 0.5 | 0.5 | 5.0 | 10.0 |
| x=E-HFO-1132 | 66.7 | 66.7 | 66.7 | 66.6 | 64.0 |
| y=R32 | 22.1 | 22.1 | 22.1 | 22.1 | 22.1 |
| Propane | 11.2 | 10.7 | 10.7 | 6.3 | 3.9 |
| Approximation for x with a | 66.7 | | $-0.0524a^2+0.266a+66.58$ | | |
| Approximation for y with a | 22.1 | | 22.1 | | |
| Approximation for z with a | -a+11.2 | | $0.0524a^2-1.266a+11.32$ | | |

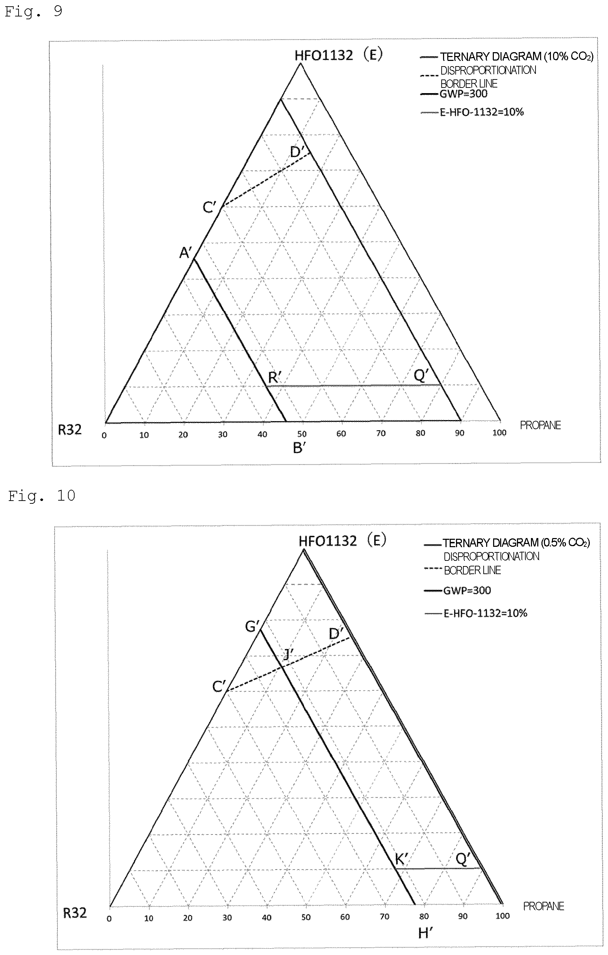

Based on Tables 25 to 28, and Figs. 10 to 12, when the refrigerant comprises trans-1,2-difluoroethylene (HFO-1132(E)), difluoroethylene (R32), propane, and carbon dioxide ($CO_2$), a total content of HFO-1132(E), R32, propane, and $CO_2$ is 99.5 mass% or more based on a total amount of the refrigerant, the content of $CO_2$ is a mass%, the mass% of HFO-1132(E), R32, and propane based on their sum are respectively represented by x, y, and z, if coordinates (x,y,z) in a ternary composition diagram in which the sum of HFO-1132(E), R32, and propane is (100-a) mass% satisfy the following requirements, a disproportionation reaction does not occur at 3 Mpa and 150°C, a refrigerating capacity (Cap) ratio relative to R1234yf is 185.0% or more, and GWP is 150 or less:

the coordinates (x,y,z) are, when $0.0 < a \leq 0.5$, within the range of a figure surrounded by straight lines J'D', D'Q', Q'K', and K'J' that connect the following 4 points:

point J' (66.7, 22.1, -a+11.2),
point D' (75.0, 0.0, -a+25.0),
point Q' (10.0, 0.0, -a+90.0), and
point K' (10.0, 21.9, -a+68.1), or

on the straight lines J'D', Q'K', and K'J', and
the coordinates (x,y,z) are, when $0.5 < a \leq 10.0$, within the range of a figure surrounded by straight lines J'D', D'Q', Q'K', and K'J' that connect the following 4 points:

point J' (-0.0524a2+0.266a+66.58, 22.1, 0.0524a2-1.266a+11.32),
point D' (75.0, 0.0, -a+25.0),
point Q' (10.0, 0.0, -a+90.0), and
point K' (10.0, 21.9, -a+68.1), or

on the straight lines J'D', Q'K', and K'J'.

Mixed refrigerants were prepared by mixing HFO-1132(E), R32, propane, and $CO_2$ at mass% based on their sum shown in Tables 25, 26 and 27.

[Table 29]

| Item | Unit | Com.Ex.3-1 | Com.Ex.9-1 | Ex.9-1 | Com.Ex.9-2 | Com.Ex.9-3 | Ex.9-2 | Ex.9-3 | Ex.9-4 |
|---|---|---|---|---|---|---|---|---|---|
| | | | C' | D' | G' | H' | Q' | K' | J' |
| E-HFO-1132 | mass% | | 60.0 | 75.0 | 77.4 | 0.0 | 10.0 | 10.0 | 66.7 |
| R32 | mass% | R404A | 39.5 | 0.0 | 22.1 | 21.9 | 0.0 | 21.9 | 22.1 |
| Propane | mass% | | 0.0 | 24.5 | 0.0 | 77.6 | 89.5 | 67.6 | 10.7 |
| $CO_2$ | mass% | | 0.5 | 0.5 | 0.5 | 0.5 | 0.5 | 0.5 | 0.5 |
| GWP | - | 3922 | 267 | 1 | 150 | 150 | 3 | 150 | 150 |
| COP ratio | % (relative to R404A) | 100.0 | 107.7 | 103.9 | 106.9 | 107.5 | 112.03 | 106.5 | 103.9 |
| Refrigerating capacity ratio | % (relative to R404A) | 100.0 | 178.0 | 160.4 | 171.7 | 127.9 | 103.7 | 138.8 | 177.0 |

| Item | Unit | Com.Ex.9-4 | Com.Ex.9-5 | Com.Ex.9-6 | Ex.9-5 | Ex.9-6 | Com.Ex.9-7 | Ex.9-7 | Ex.9-8 | Com.Ex.9-8 | Ex.9-9 |
|---|---|---|---|---|---|---|---|---|---|---|---|
| E-HFO-1132 | mass% | 5.0 | 5.0 | 5.0 | 25.0 | 25.0 | 25.0 | 45.0 | 45.0 | 45.0 | 55.0 |
| R32 | mass% | 0.0 | 15.0 | 25.0 | 0.0 | 15.0 | 25.0 | 0.0 | 15.0 | 25.0 | 0.0 |
| Propane | mass% | 94.5 | 79.5 | 69.5 | 74.5 | 59.5 | 49.5 | 54.5 | 39.5 | 29.5 | 44.5 |
| $CO_2$ | mass% | 0.5 | 0.5 | 0.5 | 0.5 | 0.5 | 0.5 | 0.5 | 0.5 | 0.5 | 0.5 |
| GWP | - | 3 | 104 | 171 | 2 | 103 | 170 | 2 | 103 | 170 | 2 |
| COP ratio | % (relative to R404A) | 112.8 | 108.6 | 106.4 | 109.9 | 106.05 | 103.8 | 106.9 | 103.1 | 102.4 | 105.3 |
| Refrigerating capacity ratio | % (relative to R404A) | 99.4 | 122.0 | 138.6 | 117.2 | 142.8 | 160.7 | 136.4 | 162.5 | 179.1 | 145.8 |

| Item | Unit | Ex.9-10 | Com.Ex.9-9 | Ex.9-11 | Ex.9=12 | Com.Ex.9-10 |
|---|---|---|---|---|---|---|
| E-HFO-1132 | mass% | 55.0 | 55.0 | 70.0 | 70.0 | 70.0 |
| R32 | mass% | 15.0 | 25.0 | 0.0 | 5.0 | 20.0 |
| Propane | mass% | 29.5 | 19.5 | 29.5 | 24.5 | 9.5 |
| $CO_2$ | mass% | 0.5 | 0.5 | 0.5 | 0.5 | 0.5 |
| GWP | - | 103 | 170 | 2 | 35 | 136 |
| COP ratio | % (relative to R404A) | 102.8 | 102.72 | 104.1 | 103.4 | 104.1 |
| Refrigerating capacity ratio | % (relative to R404A) | 171.0 | 181.0 | 158.1 | 164.7 | 175.3 |

[Table 30]

| Item | Unit | Com.Ex.3-1 | Com.Ex.9-11 | Ex.9-13 | Com.Ex.9-12 | Com.Ex.9-13 | Ex.9-14 | Ex.9-15 | Ex.9-16 |
|---|---|---|---|---|---|---|---|---|---|
| | | | C' | D' | G' | H' | Q' | K' | J' |
| E-HFO-1132 | mass% | | 60.0 | 75.0 | 72.9 | 0.0 | 10.0 | 10.0 | 66.6 |
| R32 | mass% | R404A | 35.0 | 0.0 | 22.1 | 21.9 | 0.0 | 21.9 | 22.1 |
| Propane | mass% | | 0.0 | 20.0 | 0.0 | 73.1 | 85.0 | 63.1 | 6.3 |
| $CO_2$ | mass% | | 5.0 | 5.0 | 5.0 | 5.0 | 5.0 | 5.0 | 5.0 |
| GWP | - | 3922 | 237 | 1 | 150 | 150 | 3 | 150 | 150 |
| COP ratio | % (relative to R404A) | 100.0 | 106.0 | 102.7 | 105.5 | 106.2 | 110.52 | 105.1 | 103.6 |
| Refrigerating capacity ratio | % (relative to R404A) | 100.0 | 187.9 | 171.5 | 182.9 | 138.6 | 113.5 | 150.4 | 186.3 |

| Item | Unit | Com.Ex.9-14 | Com.Ex.9-15 | Com.Ex.9-16 | Ex.9-17 | Ex.9-18 | Com.Ex.9-17 | Ex.9-19 | Ex.9-20 | Com.Ex.9-18 | Ex.9-21 |
|---|---|---|---|---|---|---|---|---|---|---|---|
| E-HFO-1132 | mass% | 5.0 | 5.0 | 5.0 | 25.0 | 25.0 | 25.0 | 45.0 | 45.0 | 45.0 | 55.0 |
| R32 | mass% | 0.0 | 15.0 | 25.0 | 0.0 | 15.0 | 25.0 | 0.0 | 15.0 | 25.0 | 0.0 |
| Propane | mass% | 90.0 | 75.0 | 65.0 | 70.0 | 55.0 | 45.0 | 50.0 | 35.0 | 25.0 | 40.0 |
| $CO_2$ | mass% | 5.0 | 5.0 | 5.0 | 5.0 | 5.0 | 5.0 | 5.0 | 5.0 | 5.0 | 5.0 |
| GWP | - | 3 | 104 | 171 | 2 | 103 | 170 | 2 | 103 | 170 | 2 |
| COP ratio | % (relative to R404A) | 111.3 | 107.2 | 105.1 | 108.3 | 104.43 | 102.0 | 105.1 | 101.7 | 101.4 | 103.6 |
| Refrigerating capacity ratio | % (relative to R404A) | 109.0 | 132.4 | 150.2 | 127.8 | 154.7 | 172.7 | 148.1 | 175.2 | 191.0 | 157.9 |

| Item | Unit | Ex.9-22 | Com.Ex.9-19 | Ex.9-23 | Ex.9-24 | Com.Ex.9-20 |
|---|---|---|---|---|---|---|
| E-HFO-1132 | mass% | 55.0 | 55.0 | 70.0 | 70.0 | 70.0 |
| R32 | mass% | 15.0 | 25.0 | 0.0 | 5.0 | 20.0 |
| Propane | mass% | 25.0 | 15.0 | 25.0 | 20.0 | 5.0 |
| $CO_2$ | mass% | 5.0 | 5.0 | 5.0 | 5.0 | 5.0 |
| GWP | - | 103 | 170 | 2 | 35 | 136 |
| COP ratio | % (relative to R404A) | 101.7 | 102.02 | 102.8 | 102.3 | 103.9 |
| Refrigerating capacity ratio | % (relative to R404A) | 183.0 | 190.9 | 169.9 | 175.9 | 184.5 |

[Table 31]

| Item | Unit | Com.Ex.3-1 | Com.Ex.9-19 | Ex.9-22 | Com.Ex.9-20 | Com.Ex.9-21 | Ex.9-23 | Ex.9-24 | Ex.9-25 |
|---|---|---|---|---|---|---|---|---|---|
| | | | C' | D' | G' | H' | Q' | K' | J' |
| E-HFO-1132 | mass% | R404A | 60.0 | 75.0 | 67.9 | 0.0 | 10.0 | 10.0 | 64.0 |
| R32 | mass% | | 30.0 | 0.0 | 22.1 | 21.9 | 0.0 | 21.9 | 22.1 |
| Propane | mass% | | 0.0 | 15.0 | 0.0 | 68.1 | 80.0 | 58.1 | 3.9 |
| $CO_2$ | mass% | | 10.0 | 10.0 | 10.0 | 10.0 | 10.0 | 10.0 | 10.0 |
| GWP | - | 3922 | 203 | 1 | 150 | 150 | 3 | 150 | 150 |
| COP ratio | % (relative to R404A) | 100.0 | 104.2 | 101.5 | 104.0 | 104.6 | 108.74 | 103.3 | 102.7 |
| Refrigerating capacity ratio | % (relative to R404A) | 100.0 | 199.5 | 184.7 | 196.2 | 151.7 | 125.2 | 164.5 | 198.5 |

| Item | Unit | Com.Ex.9-22 | Com.Ex.9-23 | Com.Ex.9-24 | Ex.9-26 | Ex.9-27 | Com.Ex.9-25 | Ex.9-28 | Ex.9-29 | Com.Ex.9-26 | Ex.9-30 |
|---|---|---|---|---|---|---|---|---|---|---|---|
| E-HFO-1132 | mass% | 5.0 | 5.0 | 5.0 | 25.0 | 25.0 | 25.0 | 45.0 | 45.0 | 45.0 | 55.0 |
| R32 | mass% | 0.0 | 15.0 | 25.0 | 0.0 | 15.0 | 25.0 | 0.0 | 15.0 | 25.0 | 0.0 |
| Propane | mass% | 85.0 | 70.0 | 60.0 | 65.0 | 50.0 | 40.0 | 45.0 | 30.0 | 20.0 | 35.0 |
| $CO_2$ | mass% | 10.0 | 10.0 | 10.0 | 10.0 | 10.0 | 10.0 | 10.0 | 10.0 | 10.0 | 10.0 |
| GWP | - | 3 | 104 | 171 | 2 | 103 | 170 | 2 | 103 | 170 | 2 |
| COP ratio | % (relative to R404A) | 109.5 | 105.5 | 103.3 | 106.4 | 102.33 | 91.2 | 102.9 | 100.1 | 100.1 | 101.7 |
| Refrigerating capacity ratio | % (relative to R404A) | 120.3 | 145.1 | 164.3 | 140.7 | 168.8 | 156.2 | 162.2 | 190.7 | 204.0 | 172.8 |

| Item | Unit | Ex.9-31 | Com. Ex.9-27 | Ex.9-32 | Ex.9-33 | Com.Ex.9-28 |
|---|---|---|---|---|---|---|
| E-HFO-1132 | mass% | 55.0 | 55.0 | 70.0 | 70.0 | 70.0 |
| R32 | mass% | 15.0 | 25.0 | 0.0 | 5.0 | 15.0 |
| Propane | mass% | 20.0 | 10.0 | 20.0 | 15.0 | 5.0 |
| $CO_2$ | mass% | 10.0 | 10.0 | 10.0 | 10.0 | 10.0 |
| GWP | - | 103 | 170 | 1 | 35 | 102 |
| COP ratio | % (relative to R404A) | 100.3 | 101.31 | 101.3 | 101.1 | 102.4 |
| Refrigerating capacity ratio | % (relative to R404A) | 196.6 | 202.5 | 183.7 | 189.0 | 194.9 |

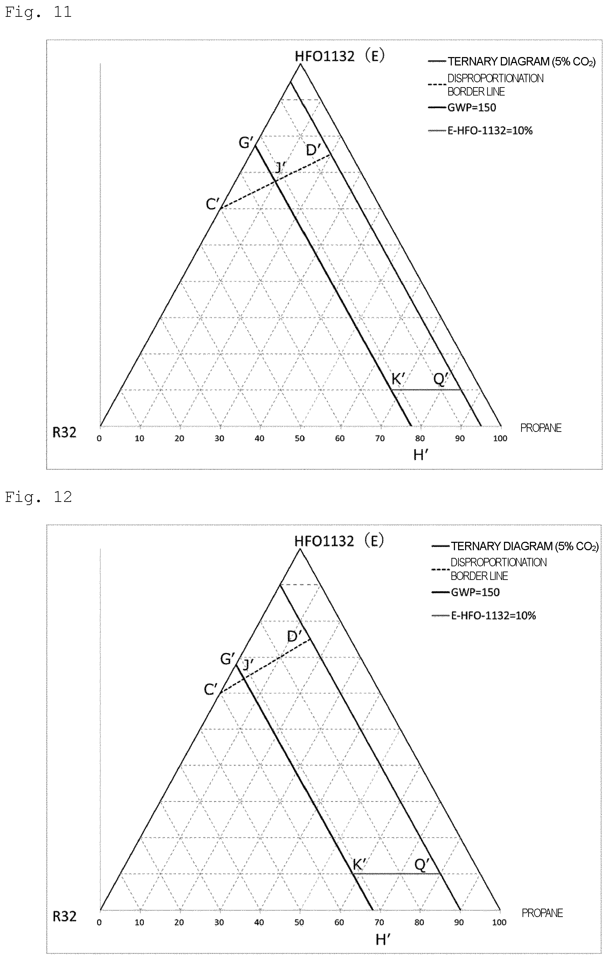

Based on Tables 28, and 29 to 31, and Figs. 11 to 12, when the refrigerant comprises trans-1,2-difluoroethylene (HFO-1132(E)), difluoroethylene (R32), propane, and carbon dioxide ($CO_2$), a total content of HFO-1132(E), R32, propane, and $CO_2$ is 99.5 mass% or more based on a total amount of the refrigerant, the content of $CO_2$ is a mass%, the mass% of HFO-1132(E), R32, and propane based on their sum are respectively represented by x, y, and z, if coordinates (x,y,z) in a ternary composition diagram in which the sum of HFO-1132(E), R32, and propane is (100-a) mass% satisfy the following requirements, a disproportionation reaction does not occur at 3 Mpa and 150°C, a refrigerating capacity (Cap) ratio relative to R404A is 103.7 or more, and GWP is 150 or less:
the coordinates (x,y,z) are, when $0.0 < a \leq 0.5$, within the range of a figure surrounded by straight lines J'D', D'Q', Q'K', and K'J' that connect the following 4 points:

> point J' (66.7, 22.1, -a+11.2),
> point D' (75.0, 0.0, -a+25.0),
> point Q' (10.0, 0.0, -a+90.0), and
> point K' (10.0, 21.9, -a+68.1), or

on the straight lines J'D', Q'K', and K'J', and
the coordinates (x,y,z) are, when $0.5 < a \leq 10.0$, within the range of a figure surrounded by straight lines J'D', D'Q', Q'K', and K'J' that connect the following 4 points:

> point J' (-0.0524a2+0.266a+66.58, 22.1, 0.0524a2-1.266a+11.32),
> point D' (75.0, 0.0, -a+25.0),
> point Q' (10.0, 0.0, -a+90.0), and
> point K' (10.0, 21.9, -a+68.1), or

on the straight lines J'D', Q'K', and K'J'.

**Claims**

1.  A composition comprising a refrigerant,
    wherein the refrigerant comprises trans-1,2-difluoroethylene (HFO-1132(E)) and propane, a total content of HFO-1132(E) and propane being 99.5 mass% or more based on a total amount of the refrigerant, the refrigerant comprising:

    > HFO-1132(E) in an amount of 25.0 mass% to 29.2 mass% based on the total amount of HFO-1132(E) and propane;
    > HFO-1132(E) in an amount of 30.7 mass% to 38.9 mass% based on the total amount of HFO-1132(E) and propane;
    > HFO-1132(E) in an amount of 43.5 mass% to 48.5 mass% based on the total amount of HFO-1132(E) and propane;
    > HFO-1132(E) in an amount of 51.2 mass% to 56.3 mass% based on the total amount of HFO-1132(E) and propane;
    > HFO-1132(E) in an amount of 61.4 mass% to 66.8 mass% based on the total amount of HFO-1132(E) and propane;
    > HFO-1132(E) in an amount of 72.4 mass% to 75.0 mass% based on the total amount of HFO-1132(E) and propane;

HFO-1132(E) in an amount of 20.6 mass% to 29.9 mass% based on the total amount of HFO-1132(E) and propane;

HFO-1132(E) in an amount of 32.0 mass% to 37.0 mass% based on the total amount of HFO-1132(E) and propane;

HFO-1132(E) in an amount of 42.2 mass% to 48.8 mass% based on the total amount of HFO-1132(E) and propane;

HFO-1132(E) in an amount of 50.4 mass% to 57.0 mass% based on the total amount of HFO-1132(E) and propane;

HFO-1132(E) in an amount of 62.3 mass% to 68.0 mass% based on the total amount of HFO-1132(E) and propane;

HFO-1132(E) in an amount of 70.8 mass% to 75.0 mass% based on the total amount of HFO-1132(E) and propane;

HFO-1132(E) in an amount of 7.0 mass% to 9.7 mass% based on the total amount of HFO-1132(E) and propane;

HFO-1132(E) in an amount of 10.4 mass% to 18.0 mass% based on the total amount of HFO-1132(E) and propane;

HFO-1132(E) in an amount of 20.6 mass% to 29.4 mass% based on the total amount of HFO-1132(E) and propane;

HFO-1132(E) in an amount of 31.3 mass% to 38.7 mass% based on the total amount of HFO-1132(E) and propane;

HFO-1132(E) in an amount of 40.6 mass% to 48.5 mass% based on the total amount of HFO-1132(E) and propane;

HFO-1132(E) in an amount of 50.8 mass% to 58.8 mass% based on the total amount of HFO-1132(E) and propane;

HFO-1132(E) in an amount of 60.1 mass% to 69.2 mass% based on the total amount of HFO-1132(E) and propane; or

HFO-1132(E) in an amount of 70.3 mass% to 75.0 mass% based on the total amount of HFO-1132(E) and propane.

2. The composition according to claim 1, wherein the refrigerant further comprises at least one member selected from the group consisting of 1,1-difluoroethylene (HFO-1132a), and 2 chloro-1,1,1,2-tetrafluoroethane (HCFC-124).

3. The composition according to claim 1 or 2, further comprising 0.1 mass% or less of water based on the entire composition.

4. The composition according to any one of claims 1 to 3, for use as an alternative refrigerant for R12, R22, R134a, R404A, R407A, R407C, R407F, R407H, R410A, R413A, R417A, R422A, R422B, R422C, R422D, R423A, R424A, R426A, R427A, R430A, R434A, R437A, R438A, R448A, R449A, R449B, R449C, R452A, R452B, R454A, R454B, R454C, R455A, R465A, R502, R507, R513A, R1234yf, or R1234ze.

5. A composition comprising a refrigerant, for operating a refrigeration cycle of air conditioning equipment for electric vehicles,

wherein the refrigerant comprises HFO-1132(E) and propane, a total content of HFO-1132(E) and propane being 99.5 mass% or more based on a total amount of the refrigerant,
a content of HFO-1132(E) is 20.6 to 75.0 mass% based on the total amount of HFO-1132(E) and propane,
a COP ratio relative to R1234yf is 99% or more, and
a refrigerating capacity ratio relative to R1234yf is 200% or more.

6. A composition comprising a refrigerant, for use as an alternative refrigerant for R410A,

wherein the refrigerant comprises HFO-1132(E), difluoroethylene (R32) and propane, a total content of HFO-1132(E), R32, and propane being 99.5 mass% or more based on a total amount of the refrigerant,
when the mass% of HFO-1132(E), R32, and propane based on their sum are respectively represented by x, y, and z, coordinates (x,y,z) in a ternary composition diagram in which the sum of HFO-1132(E), R32, and propane is 100 mass% are within the range of a figure surrounded by straight lines CP, PQ, QR, RA, and AC that connect the following 5 points:

point C (60.0, 40.0, 0.0),
point P (73.1, 5.0, 21.9),
point Q (10.0, 5.0, 85.0),
point R (10.0, 44.2, 45.8), and
point A (55.7, 44.3, 55.8), or

on the straight lines CP, QR, and RA (excluding the points A, C, P, and Q).

7. A composition comprising a refrigerant, for use as an alternative refrigerant for R1234yf and/or an alternative refrigerant for R404A,

wherein the refrigerant comprises HFO-1132(E), R32, and propane, a total content of HFO-1132(E), R32, and propane being 99.5 mass% or more based on a total amount of the refrigerant,
when the mass% of HFO-1132(E), R32, and propane based on their sum are respectively represented by x, y, and z, coordinates (x,y,z) in a ternary composition diagram in which the sum of HFO-1132(E), R32, and propane is 100 mass% are within the range of a figure surrounded by straight lines PQ, QR, KJ, and JP that connect the following 4 points:

point P (73.1, 5.0, 21.9),
point Q (10.0, 5.0, 85.0),
point K (10.0, 21.9, 68.1), and
point J (66.7, 22.1, 11.2), or

on the straight lines JP, QK, and KJ.

8. A composition comprising a refrigerant, for use as an alternative refrigerant for R410A,

wherein the refrigerant comprises HFO-1132(E), R32, propane, and carbon dioxide ($CO_2$), a total content of HFO-1132(E), R32, propane, and $CO_2$ being 99.5 mass% or more based on a total amount of the refrigerant,
when the mass% of $CO_2$, HFO-1132(E), R32, and propane based on their sum are respectively represented by a, x, y, and z, coordinates (x,y,z) in a ternary composition diagram in which the sum of HFO-1132(E), R32, and propane is (100-a) mass% are, when $0.0 < a \leq 10.0$, within the range of a figure surrounded by straight lines C'D', D'Q', Q'R', R'A', and A'C' that connect the following 5 points:

point C' (60.0, -a+40.0, 0.0),
point D' (75.0, 0, -a+25.0),
point Q' (10.0, 0.0, -a+90.0),
point R' (10.0, 44.2, -a+45.8), and
point A' (-a+55.7, 44.3, 0.0), or

on the straight lines C'D', Q'R', and R'A' (excluding the points A', C', D', and Q').

9. A composition comprising a refrigerant, for use as an alternative refrigerant for R1234yf, and/or an alternative refrigerant for R404A,

wherein the refrigerant comprises HFO-1132(E), R32, propane, and $CO_2$, a total content of HFO-1132(E), R32, propane, and $CO_2$ being 99.5 mass% or more based on a total amount of the refrigerant,
when the mass% of $CO_2$, HFO-1132(E), R32, and propane based on their sum are respectively represented by a, x, y, and z, coordinates (x,y,z) in a ternary composition diagram in which the sum of HFO-1132(E), R32, and propane is (100-a) mass% are, when $0.0 < a \leq 0.5$, within the range of a figure surrounded by straight lines J'D', D'Q', Q'K', and K'J' that connect the following 4 points:

point J' (66.7, 22.1, -a+11.2),
point D' (75.0, 0.0, -a+25.0),
point Q' (10.0, 0.0, -a+90.0), and
point K' (10.0, 21.9, -a+68.1), or

on the straight lines J'D', Q'K', and K'J', and

the coordinates (x,y,z) are, when $0.5 < a \leq 10.0$, within the range of a figure surrounded by straight lines J'D', D'Q', Q'K', and K'J' that connect the following 4 points:

point J' (-0.0524a2+0.266a+66.58, 22.1, 0.0524a2-1.266a+11.32),
point D' (75.0, 0.0, -a+25.0),
point Q' (10.0, 0.0, -a+90.0), and
point K' (10.0, 21.9, -a+68.1), or

on the straight lines J'D', Q'K', and K'J'.

10. A refrigeration apparatus comprising:

a use side heat transfer cycle for circulating a use side refrigerant;
a heat source side heat transfer cycle for circulating a heat source side refrigerant; and
a cascade heat exchanger for performing heat exchange between the use side refrigerant and the heat source side refrigerant,
wherein the heat source side refrigerant is the composition according to any one of claims 1 to 9.

11. A refrigeration method comprising a step of operating a refrigeration cycle using the composition according to any one of claims 1 to 9.

12. A refrigerator comprising the composition according to any one of claims 1 to 9 as a working fluid.

13. Use of the composition according to any one of claims 1 to 9 as a working fluid in a refrigerator.

Fig. 1

Fig. 2

Fig. 3

Fig. 4

Fig. 5

Fig. 6

Fig. 7

Fig. 8

Fig. 9

Fig. 10

Fig. 11

Fig. 12

## INTERNATIONAL SEARCH REPORT

International application No.

**PCT/JP2023/037579**

### A. CLASSIFICATION OF SUBJECT MATTER

***C09K 5/04*** (2006.01)i; ***F25B 1/00*** (2006.01)i

FI: C09K5/04 F; C09K5/04 E; F25B1/00 396U

According to International Patent Classification (IPC) or to both national classification and IPC

### B. FIELDS SEARCHED

Minimum documentation searched (classification system followed by classification symbols)

C09K5/04; F25B1/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

### C. DOCUMENTS CONSIDERED TO BE RELEVANT

| Category* | Citation of document, with indication, where appropriate, of the relevant passages | Relevant to claim No. |
|---|---|---|
| X | WO 2022/075433 A1 (DAIKIN INDUSTRIES, LTD.) 14 April 2022 (2022-04-14) claims, paragraphs [0065]-[0080], tables 1-2, etc. | 1, 3-4, 10-13 |
| Y | claims, paragraphs [0065]-[0080], tables 1-2, etc. | 2, 5-9 |
| Y | JP 2022-531819 A (MEXICHEM FLUOR S.A. DE C.V.) 12 July 2022 (2022-07-12) claims, paragraphs [0037]-[0038], [0129], etc. | 2, 6-9 |
| Y | JP 2022-504187 A (THE CHEMOURS COMPANY FC, LLC) 13 January 2022 (2022-01-13) claims, paragraphs [0156]-[0207], etc. | 5 |
| Y | WO 2020/256087 A1 (DAIKIN INDUSTRIES, LTD.) 24 December 2020 (2020-12-24) claims, paragraphs [0061]-[0132], etc. | 6-9 |
| Y | WO 2019/240205 A1 (DAIKIN INDUSTRIES, LTD.) 19 December 2019 (2019-12-19) claims, paragraphs [0097]-[0101], etc. | 6-9 |

☐ Further documents are listed in the continuation of Box C.      ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **25 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2023/037579**

| Box No. III | Observations where unity of invention is lacking (Continuation of item 3 of first sheet) |

This International Searching Authority found multiple inventions in this international application, as follows:

Document 1; WO 2022/075433 A1 (DAIKIN INDUSTRIES, LTD.) 14 April 2022 (2022-04-14) claims, paragraphs [0065]-[0080], tables 1-2, etc. (Family: none)

Claims are classified into the following three inventions.

(Invention 1) Claims 1-5 and 10-13
    Document 1 discloses a composition including a refrigerant containing trans-1,2-difluoroethylene (HFO-1132(E)) and a predetermined amount of propane, and claim 1 lacks novelty in light of document 1, and thus does not have a special technical feature. However, claim 2, which is dependent on claim 1, has the special technical feature in that said composition "further includes at least one selected from the group consisting of 1,1-difluoroethylene (HFO-1132a) and 2-chloro-1,1,2-tetrafluoroethane (HCFC-124)."
    Therefore, claims 1-2 are classified as invention 1.
    In addition, claims 3-4 and 10-13 are dependent on claim 1 and are related to claim 1, and are thus classified as invention 1.
    In addition, claim 5 is related to claim 1, and is thus classified as invention 1.

(Invention 2) Claims 6-7
    It cannot be said that claims 6 and 7 have special technical features identical or corresponding to those of claims 1-5 classified as invention 1.
    In addition, claims 6-7 are not dependent on any of claims 1-5, and are not substantially identical or equivalent to any of the claims classified as invention 1.
    Therefore, claims 6-7 cannot be classified as invention 1, and are thus classified as invention 2.

(Invention 3) Claims 8-9
    Claims 8-9 cannot be said to have special technical features identical or corresponding to those of claims 1-5 classified as invention 1, and cannot be said to have special technical features identical or corresponding to those of claims 6-7 classified as invention 2.
    In addition, claims 8-9 are not dependent on any of claims 1-7, and are not substantially identical or equivalent to any of the claims classified as invention 1 or invention 2.
    Therefore, claims 8-9 cannot be classified as invention 1 or 2, and are thus classified as invention 3.

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.
☐ The additional search fees were accompanied by the applicant's protest but the applicable protest fee was not paid within the time limit specified in the invitation.
☑ No protest accompanied the payment of additional search fees.

Form PCT/ISA/210 (continuation of first sheet) (January 2015)

## INTERNATIONAL SEARCH REPORT
**Information on patent family members**

International application No.

**PCT/JP2023/037579**

| Patent document cited in search report | Publication date (day/month/year) | Patent family member(s) | Publication date (day/month/year) |
|---|---|---|---|
| WO 2022/075433 A1 | 14 April 2022 | (Family: none) | |
| JP 2022-531819 A | 12 July 2022 | WO 2020/035690 A1 claims, p. 9, line 2 to p. 52, line 16, etc. US 2022/0127507 A1 KR 10-2021-0124990 A CN 113661224 A | |
| JP 2022-504187 A | 13 January 2022 | WO 2020/072564 A1 claims, examples, etc. US 2022/0089923 A1 CN 112739790 A KR 10-2021-0072025 A | |
| WO 2020/256087 A1 | 24 December 2020 | US 2022/0177763 A1 claims, paragraphs [0120]-[0151], etc. EP 3988861 A1 CN 113993971 A | |
| WO 2019/240205 A1 | 19 December 2019 | US 2021/0246348 A1 claims, paragraphs [0115]-[0119], etc. EP 3808828 A1 CN 112262196 A | |

Form PCT/ISA/210 (patent family annex) (January 2015)

**EP 4 538 344 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015141678 A